# EUROPEAN PATENT SPECIFICATION

(11) **EP 3 170 351 B1**
(45) Date of publication and mention of the grant of the patent: **05.12.2018**
(21) Application number: 15745652.6
(22) Date of filing: 15.07.2015
(51) Int. Cl.: H04W 72/04

(54) **SIGNALING TECHNIQUES FOR UL MU MIMO/OFDMA TRANSMISSION**
VERFAHREN ZUR SIGNALISIERUNG FÜR UL-MU-MIMO/OFDMA-ÜBERTRAGUNG
TECHNIQUES DE SIGNALISATION POUR TRANSMISSION EN ACCÈS MULTIPLE PAR RÉPARTITION EN FRÉQUENCE ORTHOGONALE MULTI-UTILISATEURS À ENTRÉE MULTIPLE SORTIE MULTIPLE (MU-MIMO/OFDMA) EN LIAISON MONTANTE

(30) Priority: 15.07.2014 US 201462024989 P; 23.07.2014 US 201462028250 P; 14.07.2015 US 201514799527
(43) Date of publication of application: 24.05.2017
(73) Proprietor: Qualcomm Incorporated, San Diego, CA 92121-1714 (US)
(72) Inventor: MERLIN, Simone, San Diego, California 92121-1714 (US); BARRIAC, Gwendolyn Denise, San Diego, California 92121-1714 (US); WENTINK, Maarten Menzo, San Diego, California 92121-1714 (US)
(74) Representative: Wegner, Hans
(86) International application number: PCT/US2015/040645
(87) International publication number: WO 2016/011198

(56) References cited:
- US-A1- 2009 116 434
- US-A1- 2010 271 992
- US-A1- 2011 268 054
- US-A1- 2012 327 915

## Description

### BACKGROUND

### Field

Certain aspects of the present disclosure generally relate to wireless communications, and more particularly, to techniques for scheduling and triggering uplink (UL) multiple user (MU) multiple-input-multiple-output (MIMO) transmission and/or uplink orthogonal frequency division multiple access (OFDMA) transmission in a wireless network.

### Background

In many telecommunication systems, communications networks are used to exchange messages among several interacting spatially-separated devices. Networks may be classified according to geographic scope, which could be, for example, a metropolitan area, a local area, or a personal area. Such networks may be designated respectively as a wide area network (WAN), metropolitan area network (MAN), local area network (LAN), or personal area network (PAN). Networks also differ according to the switching/routing technique used to interconnect the various network nodes and devices (e.g., circuit switching vs. packet switching), the type of physical media employed for transmission (e.g., wired vs. wireless), and the set of communication protocols used (e.g., Internet protocol suite, SONET (Synchronous Optical Networking), Ethernet, etc.).

Wireless networks are often preferred when the network elements are mobile and thus have dynamic connectivity needs, or if the network architecture is formed in an ad hoc, rather than fixed, topology. Wireless networks employ intangible physical media in an unguided propagation mode using electromagnetic waves in the radio, microwave, infra-red, optical, etc. frequency bands. Wireless networks advantageously facilitate user mobility and rapid field deployment when compared to fixed wired networks.

In order to address the issue of increasing bandwidth requirements that are demanded for wireless communications systems, different schemes are being developed to allow multiple user terminals to communicate with a single access point by sharing the channel resources while achieving high data throughputs. With limited communication resources, it is desirable to reduce the amount of traffic passing between the access point and the multiple terminals. For example, when multiple terminals send uplink communications to the access point, it is desirable to minimize the amount of traffic to complete the uplink of all transmissions. Thus, there is a need for an improved protocol for uplink transmissions from multiple terminals.

US 2012/0327915 A1 provides a method of receiving a physical layer convergence procedure (PLCP) protocol data unit (PPDU) by an access point (AP) in a wireless local area (LAN) system. The method includes: allocating a first transmission channel bandwidth to a first station (STA) which is multiple input multiple output (MIMO)-paired with the AP; allocating a second transmission channel bandwidth to a second STA which is MIMO-paired with the AP; transmitting to the first STA and the second STA a sync trigger for determining a time point at which the first STA transmits a first PPDU and a time point at which the second STA transmits a second PPDU; and receiving simultaneously the first PPDU and the second PPDU from the first STA and the second STA. Another example is known from US2009/0116434.

### SUMMARY

Various implementations of systems, methods and devices within the scope of the appended claims each have several aspects, no single one of which is solely responsible for the desirable attributes described herein. Without limiting the scope of the appended claims, some prominent features are described herein.

Details of one or more implementations of the subject matter described in this specification are set forth in the accompanying drawings and the description below. Other features, aspects, and advantages will become apparent from the description, the drawings, and the claims. Note that the relative dimensions of the following figures may not be drawn to scale.

In an aspect of the disclosure, a method, a computer-readable medium, and an apparatus are provided. The apparatus may be an access point. The access point transmits, to one or more stations, a first message indicating resource allocation and a specific time for the one or more stations to transmit uplink data based on downlink transmission of a second message. The access point transmits, to the one or more stations, the second message in the downlink transmission. The access point receives the uplink data from the one or more stations at the specific time based on the downlink transmission of the second message in accordance with the resource allocation.

In another aspect of the disclosure, a method, a computer-readable medium, and an apparatus are provided. The apparatus may be a station. The station receives, from an access point, a first message indicating resource allocation and a specific time to transmit uplink data based on downlink transmission of a second message. The station receives, from the access point, the second message in the downlink transmission. The station transmits the uplink data to the access point at the specific time based on the downlink transmission of the second message in accordance with the resource allocation. The invention is defined in the appended claims.

### BRIEF DESCRIPTION OF THE DRAWINGS

FIG. 1 illustrates a multiple-access multiple-input multiple-output (MIMO) system with access points and user terminals.
FIG. 2 illustrates a block diagram of the access point 110 and two user terminals 120m and 120x in a MIMO system.
FIG. 3 illustrates various components that may be utilized in a wireless device that may be employed within a wireless communication system.
FIG. 4 shows a time diagram of an example frame exchange of an uplink (UL) MU-MIMO communication.
FIG. 5 shows a time diagram of another example frame exchange of an UL-MU-MIMO communication.
FIG. 6 shows a time diagram of another example frame exchange of an UL-MU-MIMO communication.
FIG. 7 shows a time diagram of another example frame exchange of an UL-MU-MIMO communication.
FIG. 8 shows a diagram of one embodiment of a clear to transmit (CTX) frame.
FIG. 9 shows a diagram of another embodiment of a CTX frame.
FIG. 10 shows a diagram of another embodiment of a CTX frame.
FIG. 11 shows a diagram of another embodiment of a CTX frame.
FIG. 12 shows a time diagram of another example frame exchange of an UL-MU-MIMO communication.
FIG. 13 shows another example frame exchange of an UL-MU-MIMO communication.
FIG. 14 shows an example frame exchange including a trigger frame.
FIG. 15 shows another example frame exchange including a trigger frame.
FIG. 16 shows another example frame exchange including a trigger frame.
FIG. 17 is a diagram illustrating a clear-to-transmit (CTX) physical layer convergence protocol (PLCP) protocol data unit (PPDU).
FIG. 18 is a diagram illustrating a trigger PPDU.
FIG. 19 is a diagram illustrating an example frame exchange including a trigger frame and an intervening PPDU.
FIG. 20 is a diagram illustrating an example frame exchange including multiple trigger frames and an intervening PPDU.
FIG. 21 is a flow chart of a method (process) for transmitting a triggering message.
FIG. 22 is flow chart of a method (process) for responding to a triggering message.
FIG. 23 is a functional block diagram of an example wireless device.

### DETAILED DESCRIPTION

Various aspects of the novel systems, apparatuses, and methods are described more fully hereinafter with reference to the accompanying drawings. The teachings disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the novel systems, apparatuses, and methods disclosed herein, whether implemented independently of or combined with any other aspect of the invention. For example, an apparatus may be implemented or a method may be practiced using any number of the aspects set forth herein. In addition, the scope of the invention is intended to cover such an apparatus or method which is practiced using other structure, functionality, or structure and functionality in addition to or other than the various aspects of the invention set forth herein. It should be understood that any aspect disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims.

Wireless network technologies may include various types of wireless local area networks (WLANs). A WLAN may be used to interconnect nearby devices together, employing widely used networking protocols. The various aspects described herein may apply to any communication standard, such as Wi-Fi or, more generally, any member of the IEEE 802.11 family of wireless protocols.

In some aspects, wireless signals may be transmitted according to a high-efficiency 802.11 protocol using orthogonal frequency-division multiplexing (OFDM), direct-sequence spread spectrum (DSSS) communications, a combination of OFDM and DSSS communications, or other schemes. Implementations of the high-efficiency 802.11 protocol may be used for Internet access, sensors, metering, smart grid networks, or other wireless applications. Advantageously, aspects of certain devices implementing this particular wireless protocol may consume less power than devices implementing other wireless protocols, may be used to transmit wireless signals across short distances, and/or may be able to transmit signals less likely to be blocked by objects, such as humans.

In some implementations, a WLAN includes various devices which are the components that access the wireless network. For example, there may be two types of devices: access points ("APs") and clients (also referred to as stations, or "STAs"). In general, an AP serves as a hub or base station for the WLAN and an STA serves as a user of the WLAN. For example, a STA may be a laptop computer, a personal digital assistant (PDA), a mobile phone, etc. In an example, an STA connects to an AP via a Wi-Fi (e.g., the Institute of Electrical and Electronics Engineers (IEEE) 802.11 protocol such as 802.11ah) compliant wireless link to obtain general connectivity to the Internet or to other wide area networks. In some implementations an STA may also be used as an AP.

The techniques described herein may be used for various broadband wireless communication systems, including communication systems that are based on an orthogonal multiplexing scheme. Examples of such communication systems include Spatial Division Multiple Access (SDMA), Time Division Multiple Access (TDMA), Orthogonal Frequency Division Multiple Access (OFDMA) systems, Single-Carrier Frequency Division Multiple Access (SC-FDMA) systems, and so forth. An SDMA system may utilize sufficiently different directions to simultaneously transmit data belonging to multiple user terminals. A TDMA system may allow multiple user terminals to share the same frequency channel by dividing the transmission signal into different time slots, each time slot being assigned to different user terminal. A TDMA system may implement GSM or some other standards known in the art. An OFDMA system utilizes orthogonal frequency division multiplexing (OFDM), which is a modulation technique that partitions the overall system bandwidth into multiple orthogonal sub-carriers. These sub-carriers may also be called tones, bins, etc. With OFDM, each sub-carrier may be independently modulated with data. An OFDM system may implement IEEE 802.11 or some other standards known in the art. An SC-FDMA system may utilize interleaved FDMA (IFDMA) to transmit on sub-carriers that are distributed across the system bandwidth, localized FDMA (LFDMA) to transmit on a block of adjacent sub-carriers, or enhanced FDMA (EFDMA) to transmit on multiple blocks of adjacent sub-carriers. In general, modulation symbols are sent in the frequency domain with OFDM and in the time domain with SC-FDMA. A SC-FDMA system may implement 3GPP-LTE (3rd Generation Partnership Project Long Term Evolution) or other standards.

The teachings herein may be incorporated into (e.g., implemented within or performed by) a variety of wired or wireless apparatuses (e.g., nodes). In some aspects, a wireless node implemented in accordance with the teachings herein may comprise an access point or an access terminal.

An access point ("AP") may comprise, be implemented as, or known as a NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, Basic Service Set ("BSS"), Extended Service Set ("ESS"), Radio Base Station ("RBS"), or some other terminology.

A station "STA" may also comprise, be implemented as, or known as a user terminal, an access terminal ("AT"), a subscriber station, a subscriber unit, a mobile station, a remote station, a remote terminal, a user agent, a user device, user equipment, or some other terminology. In some implementations an access terminal may comprise a cellular telephone, a cordless telephone, a Session Initiation Protocol ("SIP") phone, a wireless local loop ("WLL") station, a personal digital assistant ("PDA"), a handheld device having wireless connection capability, or some other suitable processing device connected to a wireless modem. Accordingly, one or more aspects taught herein may be incorporated into a phone (e.g., a cellular phone or smartphone), a computer (e.g., a laptop), a portable communication device, a headset, a portable computing device (e.g., a personal data assistant), an entertainment device (e.g., a music or video device, or a satellite radio), a gaming device or system, a global positioning system device, or any other suitable device that is configured to communicate via a wireless medium.

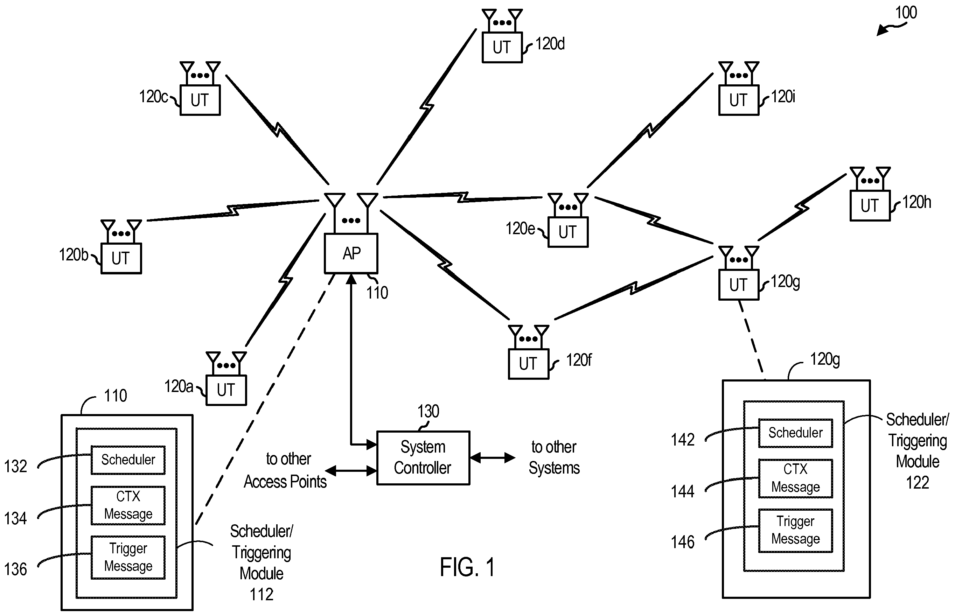

FIG. 1 is a diagram that illustrates a multiple-access multiple-input multiple-output (MIMO) system 100 with access points and user terminals. For simplicity, only one access point 110 is shown in FIG. 1. An access point is generally a fixed station that communicates with the user terminals and may also be referred to as a base station or using some other terminology. A user terminal or STA may be fixed or mobile and may also be referred to as a mobile station or a wireless device, or using some other terminology. The access point 110 may communicate with one or more user terminals 120 at any given moment on the downlink and uplink. The downlink (i.e., forward link) is the communication link from the access point to the user terminals, and the uplink (i.e., reverse link) is the communication link from the user terminals to the access point. A user terminal may also communicate peer-to-peer with another user terminal. A system controller 130 couples to and provides coordination and control for the access points.

While portions of the following disclosure will describe user terminals 120 capable of communicating via Spatial Division Multiple Access (SDMA), for certain aspects, the user terminals 120 may also include some user terminals that do not support SDMA. Thus, for such aspects, the AP 110 may be configured to communicate with both SDMA and non-SDMA user terminals. This approach may conveniently allow older versions of user terminals ("legacy" stations) that do not support SDMA to remain deployed in an enterprise, extending their useful lifetime, while allowing newer SDMA user terminals to be introduced as deemed appropriate.

The system 100 employs multiple transmit and multiple receive antennas for data transmission on the downlink and uplink. The access point 110 is equipped with *N*ₐₚ antennas and represents the multiple-input (MI) for downlink transmissions and the multiple-output (MO) for uplink transmissions. A set of K selected user terminals 120 collectively represents the multiple-output for downlink transmissions and the multiple-input for uplink transmissions. For pure SDMA, it is desired to have *N*ₐₚ ≤ K ≤ 1 if the data symbol streams for the K user terminals are not multiplexed in code, frequency or time by some means. K may be greater than *N*ₐₚ if the data symbol streams can be multiplexed using TDMA technique, different code channels with CDMA, disjoint sets of sub-bands with OFDM, and so on. Each selected user terminal may transmit user-specific data to and/or receive user-specific data from the access point. In general, each selected user terminal may be equipped with one or multiple antennas (i.e., *N*_{*u*t} ≥1). The K selected user terminals can have the same number of antennas, or one or more user terminals may have a different number of antennas.

The SDMA system 100 may be a time division duplex (TDD) system or a frequency division duplex (FDD) system. For a TDD system, the downlink and uplink share the same frequency band. For an FDD system, the downlink and uplink use different frequency bands. The MIMO system 100 may also utilize a single carrier or multiple carriers for transmission. Each user terminal may be equipped with a single antenna (e.g., in order to keep costs down) or multiple antennas (e.g., where the additional cost can be supported). The system 100 may also be a TDMA system if the user terminals 120 share the same frequency channel by dividing transmission/reception into different time slots, where each time slot may be assigned to a different user terminal 120.

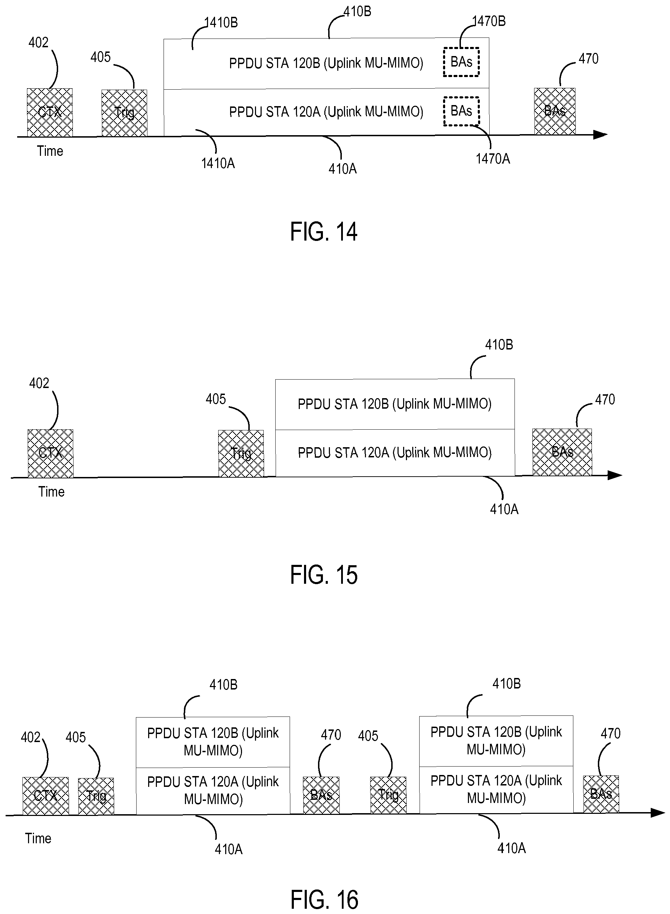

In one aspect, an access point (e.g., the access point 110) may include one or more modules for performing various functions. For example, the access point 110 may include a scheduler/triggering module 112. The scheduler/triggering module 112 may include a scheduler 132, a CTX message module 134, and trigger message module 136. The scheduler 132 and the CTX message module 134 may control a process of transmitting, to one or more stations, a first message indicating resource allocation and a specific time for the one or more stations to transmit uplink data based on downlink transmission of a second message. The scheduler 132 and the trigger message module 136 may control a process of transmitting, to the one or more stations, the second message in the downlink transmission. The scheduler 132 may control a process of receiving the uplink data from the one or more stations at the specific time based on the downlink transmission of the second message in accordance with the resource allocation. In certain configurations, the specific time comprises a time period after the downlink transmission of the second message. In certain configurations, the time period after the downlink transmission of the second message is within a SIFS or a PIFS after the downlink transmission of the second message. In certain configurations, the second message includes an indication indicating that the second message is a trigger for transmitting the uplink data. The indication is included in a PHY header or a MAC header of the second message. In certain configurations, the scheduler 132 may control a process of transmitting a PPDU subsequent to the transmission of the first message and prior to the transmission of the second message. The PPDU does not include an indication indicating that the PPDU is a trigger for transmitting the uplink data. In certain configurations, the first message includes a first token. The second message includes a second token that matches the first token. In certain configurations, the second token is included in a PHY header or a MAC header of the second message. In certain configurations, the first token and the second token expire after a predetermined time period subsequent to the transmission of the first message. The scheduler/triggering module 112 is described in more detail *infra* referring to FIG. 14-23.

In another aspect, a station (e.g., the user terminal 120g) may include one or more modules for performing various functions. For example, the user terminal 120g may include a scheduler/triggering module 122. The scheduler/triggering module 122 may include a scheduler 142, a CTX message module 144, and trigger message module 146. The CTX message module 144 may control a process of receive, from an access point, a first message indicating resource allocation and a specific time to transmit uplink data based on downlink transmission of a second message. The trigger message module 146 may control a process of receive, from the access point, the second message in the downlink transmission. The scheduler 142 may control a process of transmit the uplink data to the access point at the specific time based on the downlink transmission of the second message in accordance with the resource allocation. In certain configurations, the resource allocation is for at least two stations including the station. The transmission of the uplink data is concurrent with uplink transmission of another station of the at least two stations. In certain configurations, the specific time comprises a time period after the downlink transmission of the second message. In certain configurations, the time period after the downlink transmission of the second message is within a SIFS or a PIFS after the downlink transmission of the second message.

In certain configurations, the trigger message module 146 may control a process of detect, in the second message, an indication indicating that the second message is a trigger for transmitting the uplink data. The uplink data is transmitted in response to the detection of the indication. In certain configurations, the CTX message module 144 may control a process of detect that the first message includes a first token. The trigger message module 146 may control a process of detect that the second message includes a second token. The CTX message module 144 and the trigger message module 146 may control a process of determine that the second token matches the first token. The transmission of the uplink data is performed in response to the determination that the second token matches the first token. In certain configurations, the second token is included in a PHY header or MAC header of the second message. In certain configurations, the first token and the second token expire after a predetermined amount of time subsequent to the reception of the first message. The scheduler/triggering module 122 is described in more detail *infra* referring to FIG. 14-23.

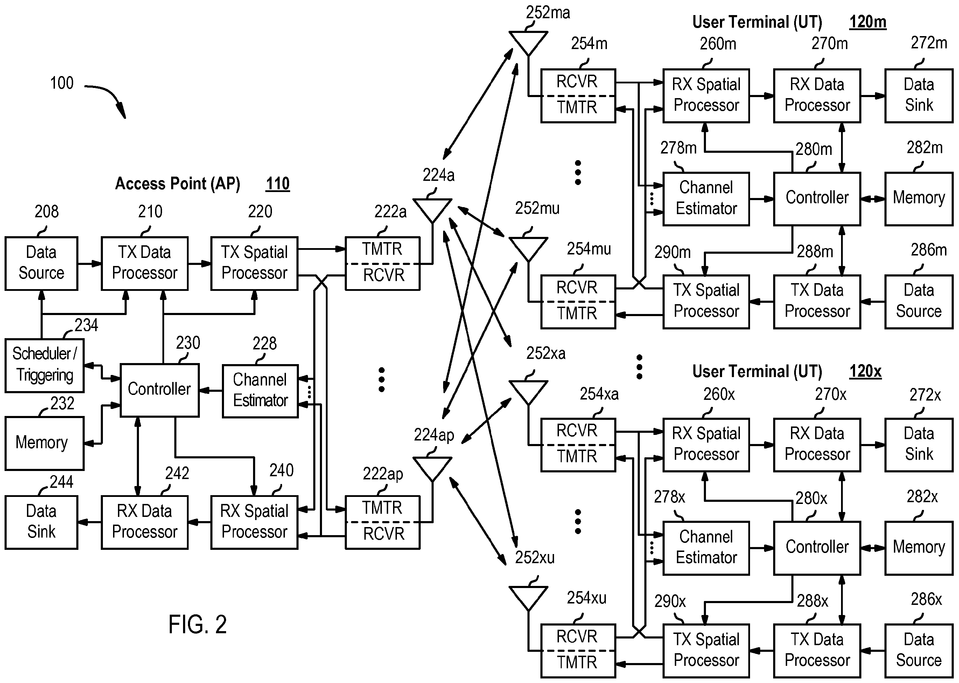

FIG. 2 illustrates a block diagram of the access point 110 and two user terminals 120m and 120x in MIMO system 100. The access point 110 is equipped with Nₜ antennas 224a through 224ap. The user terminal 120m is equipped with N_{ut,m} antennas 252ₘₐ through 252ₘᵤ, and the user terminal 120x is equipped with N_{ut,x} antennas 252ₓₐ through 252ₓᵤ. The access point 110 is a transmitting entity for the downlink and a receiving entity for the uplink. The user terminal 120 is a transmitting entity for the uplink and a receiving entity for the downlink. As used herein, a "transmitting entity" is an independently operated apparatus or device capable of transmitting data via a wireless channel, and a "receiving entity" is an independently operated apparatus or device capable of receiving data via a wireless channel. In the following description, the subscript "dn" denotes the downlink, the subscript "up" denotes the uplink, Nᵤₚ user terminals are selected for simultaneous transmission on the uplink, and N_{dn} user terminals are selected for simultaneous transmission on the downlink. Nᵤₚ may or may not be equal to N_{dn}, and Nᵤₚ and N_{dn} may be static values or may change for each scheduling interval. Beam-steering or some other spatial processing technique may be used at the access point 110 and/or the user terminal 120.

On the uplink, at each user terminal 120 selected for uplink transmission, a TX data processor 288 receives traffic data from a data source 286 and control data from a controller 280. The TX data processor 288 processes (e.g., encodes, interleaves, and modulates) the traffic data for the user terminal based on the coding and modulation schemes associated with the rate selected for the user terminal and provides a data symbol stream. A TX spatial processor 290 performs spatial processing on the data symbol stream and provides N_{ut,m} transmit symbol streams for the N_{ut,m} antennas. Each transmitter unit (TMTR) 254 receives and processes (e.g., converts to analog, amplifies, filters, and frequency upconverts) a respective transmit symbol stream to generate an uplink signal. N_{ut,m} transmitter units 254 provide N_{ut,m} uplink signals for transmission from N_{ut,m} antennas 252, for example to transmit to the access point 110.

Nᵤₚ user terminals may be scheduled for simultaneous transmission on the uplink. Each of these user terminals may perform spatial processing on its respective data symbol stream and transmit its respective set of transmit symbol streams on the uplink to the access point 110.

At the access point 110, Nᵤₚ antennas 224a through 224ₐₚ receive the uplink signals from all Nᵤₚ user terminals transmitting on the uplink. Each antenna 224 provides a received signal to a respective receiver unit (RCVR) 222. Each receiver unit 222 performs processing complementary to that performed by transmitter unit 254 and provides a received symbol stream. An RX spatial processor 240 performs receiver spatial processing on the Nᵤₚ received symbol streams from Nᵤₚ receiver units 222 and provides Nᵤₚ recovered uplink data symbol streams. The receiver spatial processing may be performed in accordance with the channel correlation matrix inversion (CCMI), minimum mean square error (MMSE), soft interference cancellation (SIC), or some other technique. Each recovered uplink data symbol stream is an estimate of a data symbol stream transmitted by a respective user terminal. An RX data processor 242 processes (e.g., demodulates, deinterleaves, and decodes) each recovered uplink data symbol stream in accordance with the rate used for that stream to obtain decoded data. The decoded data for each user terminal may be provided to a data sink 244 for storage and/or a controller 230 for further processing.

On the downlink, at the access point 110, a TX data processor 210 receives traffic data from a data source 208 for N_{dn} user terminals scheduled for downlink transmission, control data from a controller 230, and possibly other data from a scheduler/triggering module 234. The scheduler/triggering module 234 may control a process of transmitting, to one or more of the user terminals 120, a first message indicating resource allocation and a specific time for the one or more user terminals 120 to transmit uplink data based on downlink transmission of a second message. The scheduler/triggering module 234 may control a process of transmitting, to the one or more user terminals 120, the second message in the downlink transmission. The scheduler/triggering module 234 may control a process of receiving the uplink data from the one or more user terminals 120 at the specific time based on the downlink transmission of the second message in accordance with the resource allocation, as described *infra* referring to FIG. 14-23. The various types of data may be sent on different transport channels. TX data processor 210 processes (e.g., encodes, interleaves, and modulates) the traffic data for each user terminal based on the rate selected for that user terminal. The TX data processor 210 provides N_{dn} downlink data symbol streams for the N_{dn} user terminals. A TX spatial processor 220 performs spatial processing (such as a precoding or beamforming) on the N_{dn} downlink data symbol streams, and provides Nᵤₚ transmit symbol streams for the Nᵤₚ antennas. Each transmitter unit 222 receives and processes a respective transmit symbol stream to generate a downlink signal. Nᵤₚ transmitter units 222 may provide Nᵤₚ downlink signals for transmission from Nᵤₚ antennas 224, for example to transmit to the user terminals 120.

At each user terminal 120, N_{ut,m} antennas 252 receive the Nᵤₚ downlink signals from the access point 110. Each receiver unit 254 processes a received signal from an associated antenna 252 and provides a received symbol stream. An RX spatial processor 260 performs receiver spatial processing on N_{ut,m} received symbol streams from N_{ut,m} receiver units 254 and provides a recovered downlink data symbol stream for the user terminal 120. The receiver spatial processing may be performed in accordance with the CCMI, MMSE, or some other technique. An RX data processor 270 processes (e.g., demodulates, deinterleaves and decodes) the recovered downlink data symbol stream to obtain decoded data for the user terminal.

At each user terminal 120, a channel estimator 278 estimates the downlink channel response and provides downlink channel estimates, which may include channel gain estimates, SNR estimates, noise variance and so on. Similarly, a channel estimator 228 estimates the uplink channel response and provides uplink channel estimates. Controller 280 for each user terminal typically derives the spatial filter matrix for the user terminal based on the downlink channel response matrix H_{dn,m} for that user terminal. The controller 280 for each user terminal may control processing of scheduling and/or triggering information. For example, the controller 280 may control a process of receiving, from the access point 110, a first message indicating resource allocation and a specific time to transmit uplink data based on downlink transmission of a second message. The controller 280 may control a process of receiving, from the access point 110, the second message in the downlink transmission. The controller 280 may control a process of transmitting the uplink data to the access point 110 at the specific time based on the downlink transmission of the second message in accordance with the resource allocation, as described *infra* referring to FIG. 14-23. Controller 230 derives the spatial filter matrix for the access point based on the effective uplink channel response matrix H_{up,eff}. The controller 280 for each user terminal may send feedback information (e.g., the downlink and/or uplink eigenvectors, eigenvalues, SNR estimates, and so on) to the access point 110. The controllers 230 and 280 may also control the operation of various processing units at the access point 110 and user terminal 120, respectively.

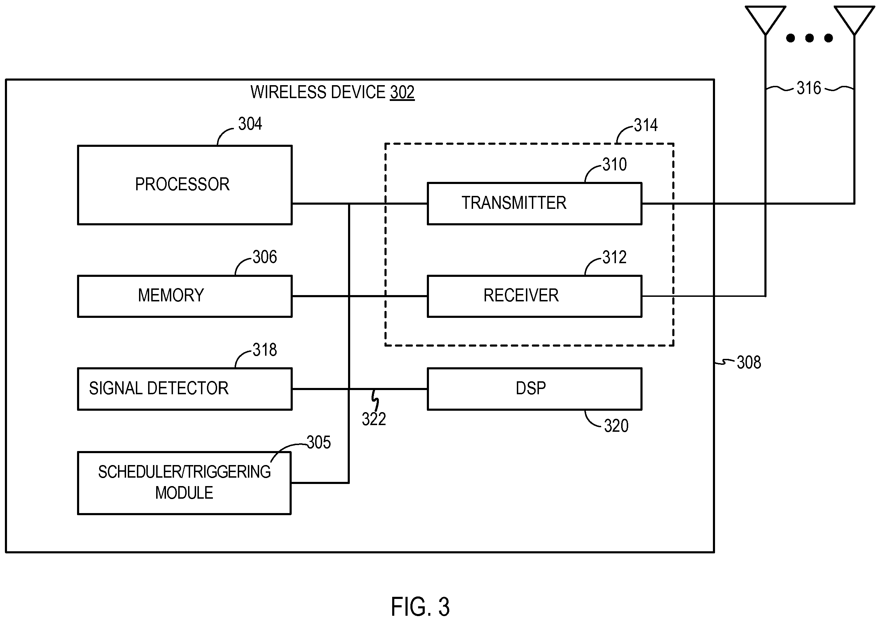

FIG. 3 illustrates various components that may be utilized in a wireless device 302 that may be employed within the wireless communication system 100. The wireless device 302 is an example of a device that may be configured to implement the various methods described herein. The wireless device 302 may implement an access point 110 or a user terminal 120.

The wireless device 302 may include a processor 304 which controls operation of the wireless device 302. The processor 304 may also be referred to as a central processing unit (CPU). Memory 306, which may include both read-only memory (ROM) and random access memory (RAM), provides instructions and data to the processor 304. A portion of the memory 306 may also include non-volatile random access memory (NVRAM). The processor 304 may perform logical and arithmetic operations based on program instructions stored within the memory 306. The instructions in the memory 306 may be executable to implement the methods described herein.

The processor 304 may comprise or be a component of a processing system implemented with one or more processors. The one or more processors may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

The processing system may also include machine-readable media for storing software. Software shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the one or more processors, cause the processing system to perform the various functions described herein.

In certain configurations, the wireless device 302 includes a scheduler/triggering module 305. In one aspect, the wireless device 302 may be an access point (e.g., the access point 110). The scheduler/triggering module 305 may instruct the access point 110 to transmit, to one or more of the user terminals 120, a first message indicating resource allocation and a specific time for the one or more user terminals 120 to transmit uplink data based on downlink transmission of a second message. The scheduler/triggering module 305 may instruct the access point 110 to transmit, to the one or more user terminals 120, the second message in the downlink transmission. The access point 110 receives the uplink data from the one or more user terminals 120 at the specific time based on the downlink transmission of the second message in accordance with the resource allocation, as described *infra* referring to FIG. 14-23. In another aspect, the wireless device 302 may be a station (e.g., the user terminal 120). The user terminal 120 receives, from the access point 110, a first message indicating resource allocation and a specific time to transmit uplink data based on downlink transmission of a second message. The user terminal 120 receives, from the access point 110, the second message in the downlink transmission. The scheduler/triggering module 305 may instruct the user terminal 120 to transmit the uplink data to the access point 110 at the specific time based on the downlink transmission of the second message in accordance with the resource allocation, as described *infra* referring to FIG. 14-23.

The wireless device 302 may also include a housing 308 that may include a transmitter 310 and a receiver 312 to allow transmission and reception of data between the wireless device 302 and a remote location. The transmitter 310 and receiver 312 may be combined into a transceiver 314. A single or a plurality of transceiver antennas 316 may be attached to the housing 308 and electrically coupled to the transceiver 314. The wireless device 302 may also include (not shown) multiple transmitters, multiple receivers, and multiple transceivers.

The wireless device 302 may also include a signal detector 318 that may be used in an effort to detect and quantify the level of signals received by the transceiver 314. The signal detector 318 may detect such signals as total energy, energy per subcarrier per symbol, power spectral density and other signals. The wireless device 302 may also include a digital signal processor (DSP) 320 for use in processing signals.

The various components of the wireless device 302 may be coupled together by a bus system 322, which may include a power bus, a control signal bus, and a status signal bus in addition to a data bus.

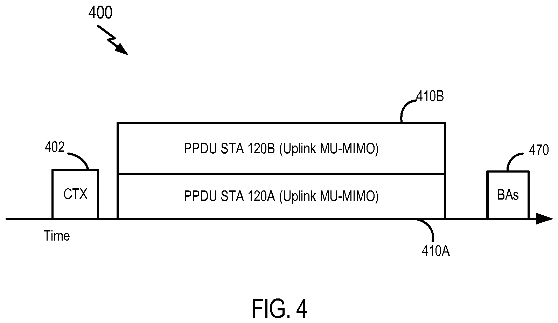

Certain aspects of the present disclosure support transmitting an uplink (UL) signal from multiple STAs to an AP. In some embodiments, the UL signal may be transmitted in a multi-user MIMO (MU-MIMO) system. Alternatively, the UL signal may be transmitted in a multi-user FDMA (MU-FDMA) or similar FDMA system. Specifically, FIGs. 4-7 and 12-16 illustrate UL-MU-MIMO transmissions 410A, 410B, 1050A, and 1050B that would apply equally to UL-FDMA transmissions. In these embodiments, UL-MU-MIMO or UL-FDMA transmissions can be sent simultaneously from multiple STAs to an AP and may create efficiencies in wireless communication.

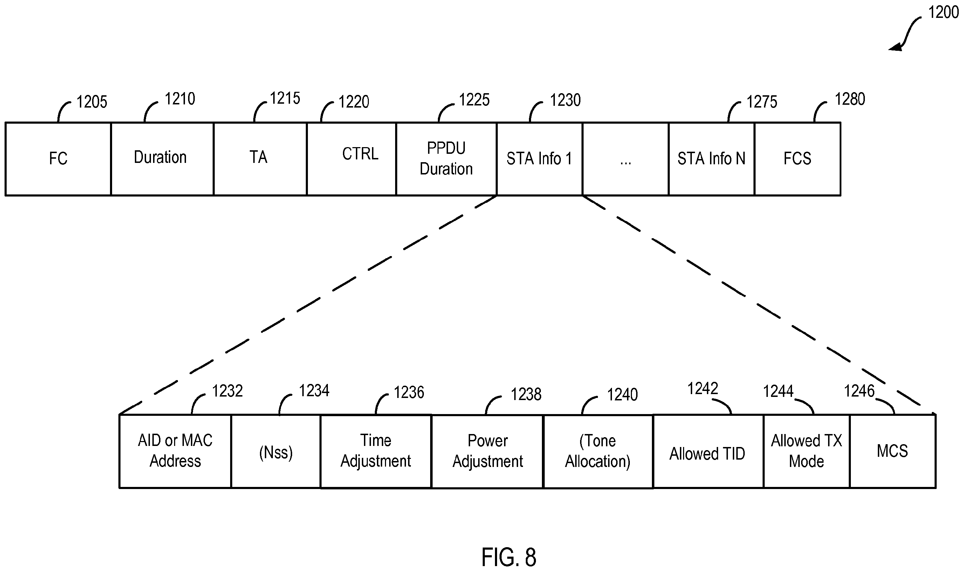

FIG. 4 is a time sequence diagram illustrating an example of an UL-MU-MIMO protocol 400 that may be used for UL communications. As shown in FIG. 4 and in conjunction with FIG. 1, an AP 110 may transmit a clear to transmit (CTX) message 402 (or a CTX PPDU 402) to the user terminals 120 indicating which STAs may participate in the UL-MU-MIMO scheme, such that a particular STA knows to start an UL-MU-MIMO. An example of a CTX frame structure is described more fully below with reference to FIGs. 8-11.

Once a user terminal 120 receives a CTX message 402 from the AP 110 where the user terminal is listed, the user terminal may transmit the UL-MU-MIMO transmission 410. In FIG. 4, STA 120A and STA 120B transmit UL-MU-MIMO transmission 410A and 410B containing physical layer convergence protocol (PLCP) protocol data units (PPDUs). Upon receiving the UL-MU-MIMO transmission 410, the AP 110 may transmit block acknowledgments (BAs) 470 to the user terminals 120.

Not all APs or user terminals 120 may support UL-MU-MIMO or UL-FDMA operation. A capability indication from a user terminal 120 may be indicated in a high efficiency wireless (HEW) capability element that is included in an association request or probe request and may include a bit indicating capability, the maximum number of spatial streams a user terminal 120 can use in a UL-MU- MIMO transmission, the frequencies a user terminal 120 can use in a UL-FDMA transmission, the minimum and maximum power and granularity in the power backoff, and the minimum and maximum time adjustment a user terminal 120 can perform.

A capability indication from an AP may be indicated in a HEW capability element that is included in an association response, beacon or probe response and may include a bit indicating capability, the maximum number of spatial streams a single user terminal 120 can use in a UL-MU- MIMO transmission, the frequencies a single user terminal 120 can use in a UL-FDMA transmission, the required power control granularity, and the required minimum and maximum time adjustment a user terminal 120 should be able to perform.

In one embodiment, capable user terminals 120 may request to a capable AP to be part of the UL-MU-MIMO (or UL-FDMA) protocol by sending a management frame to the AP indicating request for enablement of the use of UL-MU-MIMO feature. In one aspect, an AP 110 may respond by granting the use of the UL-MU-MIMO feature or denying it. Once the use of the UL-MU-MIMO is granted, the user terminal 120 may expect a CTX message 402 at a variety of times. Additionally, once a user terminal 120 is enabled to operate the UL-MU-MIMO feature, the user terminal 120 may be subject to follow a certain operation mode. If multiple operation modes are possible, an AP may indicate to the user terminal 120 which mode to use in a HEW capability element or in an operation element. In one aspect the user terminals 120 can change the operation modes and parameters dynamically during operation by sending a different operating element to the AP 110. In another aspect the AP 110 may switch operation modes dynamically during operation by sending an updated operating element to a user terminal 120 or in a beacon. In another aspect, the operation modes may be indicated in the setup phase and may be setup per user terminal 120 or for a group of user terminals 120. In another aspect the operation mode may be specified per traffic identifier (TID).

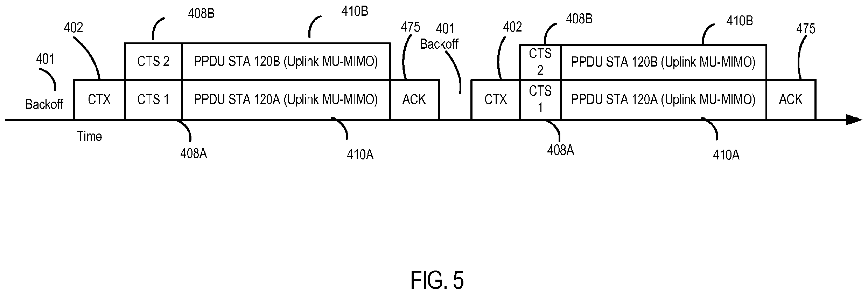

FIG. 5 is a time sequence diagram that, in conjunction with FIG. 1, illustrates an example of an operation mode of a UL-MU-MIMO transmission. In this embodiment, a user terminal 120 receives a CTX message 402 from an AP 110 and sends an immediate response to the AP 110. The response may be in the form of a clear to send (CTS) 408 or another similar signal. In one aspect, requirement to send a CTS may be indicated in the CTX message 402 or may be indicated in the setup phase of the communication. As shown in FIG. 5, STA 120A and STA 120B may respectively transmit a CTS 1 408A message and a CTS 2 408B message in response to receiving the CTX message 402. The modulation and coding scheme (MCS) of the CTS 1 408A and CTS 2 408B may be based on the MCS of the CTX message 402. In this embodiment, CTS 1 408A and CTS 2 408B contain the same bits and the same scrambling sequence so that they may be transmitted to the AP 110 at the same time. The duration field of the CTS 408 signals may be based on the duration field in the CTX by removing the time for the CTX PPDU. The UL-MU-MIMO transmission 410A and 410B are then sent by the STAs 120A and 120B as listed in the CTX 402 signals. The AP 110 may then send acknowledgment (ACK) signals to the STAs 120A and 120B. In some aspects, the ACK signals may be serial ACK signals to each station or BAs. In some aspects the ACKs may be polled. This embodiment creates efficiencies by simultaneously transmitting CTS 408 signals from multiple STAs to an AP 110 instead of sequentially, which saves time and reduces the possibility of interference.

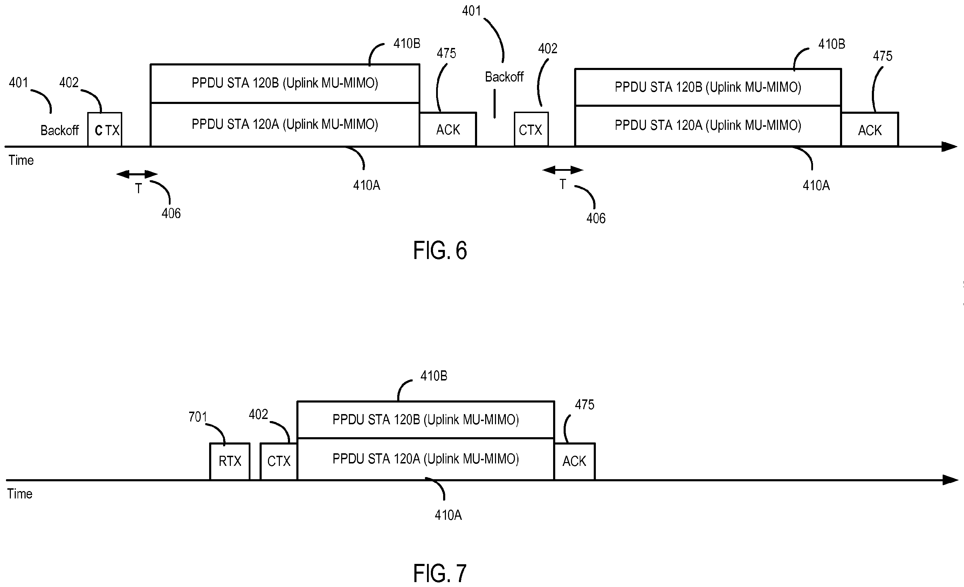

FIG. 6 is a time sequence diagram that, in conjunction with FIG. 1, illustrates another example of an operation mode of a UL-MU-MIMO transmission. In this embodiment, user terminals 120A and 120B receive a CTX message 402 from an AP 110 and are allowed to start and UL-MU-MIMO transmission a time (T) 406 after the end of the PPDU carrying the CTX message 402. The T 406 may be a short interframe space (SIFS), point interframe space (PIFS), or another time potentially adjusted with additional offsets as indicated by an AP 110 in the CTX message 402 or via a management frame. The SIFS and PIFS time may be fixed in a standard or indicated by an AP 110 in the CTX message 402 or in a management frame. The benefit of T 406 may be to improve synchronization or to allow user terminals 120A and 120B time to process the CTX message 402 or other messages before transmission.

Referring to FIGs. 4-6, in conjunction with FIG. 1, the UL-MU-MIMO transmission 410 may have the same duration. The duration of the UL-MU-MIMO transmission 410 for user terminals utilizing the UL-MU-MIMO feature may be indicated in the CTX message 402 or during the setup phase. To generate a PPDU of the required duration, a user terminal 120 may build a PLCP service data unit (PSDU) so that the length of the PPDU matches the length indicated in the CTX message 402. In another aspect, a user terminal 120 may adjust the level of data aggregation in a media access control (MAC) protocol data unit (A-MPDU) or the level of data aggregation in a MAC service data units (A-MSDU) to approach the target length. In another aspect, a user terminal 120 may add end of file (EOF) padding delimiters to reach the target length. In another approach the padding or the EOF pad fields are added at the beginning of the A-MPDU. One of the benefits of having all the UL-MU-MIMO transmissions the same length is that the power level of the transmission will remain constant.

In some embodiments, a user terminal 120 may have data to upload to the AP but the user terminal 120 has not received a CTX message 402 or other signal indicating that the user terminal 120 may start a UL-MU-MIMO transmission.

In one operation mode, the user terminals 120 may not transmit outside an UL-MU-MIMO transmission opportunity (TXOP) (e.g., after CTX message 402). In another operation mode, user terminals 120 may transmit frames to initialize a UL-MU-MIMO transmission, and then may transmit during the UL-MU-MIMO TXOP, if for example, they are instructed to do so in a CTX message 402. In one embodiment, the frame to initialize a UL-MU-MIMO transmission may be a request to transmit (RTX), a frame specifically designed for this purpose. The RTX frames may be the only frames a user terminal 120 is allowed to use to initiate a UL MU MIMO TXOP. In one embodiment, the user terminal may not transmit outside an UL-MU-MIMO TXOP other than by sending an RTX. In another embodiment, a frame to initialize an UL MU MIMO transmission may be any frame which indicates to an AP 110 that a user terminal 120 has data to send. It may be pre-negotiated that these frames indicate a UL MU MIMO TXOP request. For example, the following may be used to indicate that a user terminal 120 has data to send and is requesting an UL MU MIMO TXOP: an RTS, a data frame or QoS Null frame with bits 8-15 of the QoS control frame set to indicate more data, or a PS poll. In one embodiment, the user terminal may not transmit outside an UL MU MIMO TXOP other than by sending frames to trigger the TXOP, where the frame may be an RTS, PS poll, or QoS Null. In another embodiment, the user terminal may send single user uplink data as usual, and may indicate a request for a UL MU MIMO TXOP by setting bits in the QoS control frame of its data packet.

FIG. 7 is a time sequence diagram illustrating, in conjunction with FIG. 1, an example where the frame to initialize a UL-MU-MIMO is a RTX 701. In this embodiment the user terminal 120 sends to the AP 110 a RTX 701 that includes information regarding the UL-MU-MIMO transmission. As shown in FIG. 7, the AP 110 may respond to the RTX 701 with a CTX message 402 granting an UL-MU-MIMO TXOP to send the UL-MU-MIMO transmission 410 immediately following the CTX message 402. In another aspect, the AP 110 may respond with a CTS that grants a single-user (SU) UL TXOP. In another aspect, the AP 110 may respond with a frame (e.g., ACK or CTX with a special indication) that acknowledges the reception of the RTX 701 but does not grant an immediate UL-MU-MIMO TXOP. In another aspect, the AP 110 may respond with a frame that acknowledges the reception of the RTX 701, does not grant an immediate UL-MU-MIMO TXOP, but grants a delayed UL-MU-MIMO TXOP and may identify the time of the TXOP is granted. In this embodiment, the AP 110 may send a CTX message 402 to start the UL-MU-MIMO at the granted time.

In another aspect, the AP 110 may respond to the RTX 701 with an ACK or other response signal which does not grant the user terminal 120 an UL-MU-MIMO transmission but indicates that the user terminal 120 shall wait for a time (T) before attempting another transmission (e.g., sending another RTX). In this aspect the time (T) may be indicated by the AP 110 in the setup phase or in the response signal. In another aspect an AP 110 and a user terminal 120 may agree on a time which the user terminal 120 may transmit a RTX 701, RTS, PS-poll, or any other request for a UL-MU-MIMO TXOP.

In another operation mode, user terminals 120 may transmit requests for UL-MU-MIMO transmissions 410 in accordance with regular contention protocol. In another aspect, the contention parameters for user terminals 120 using UL-MU-MIMO are set to a different value than for other user terminals that are not using the UL-MU-MIMO feature. In this embodiment, the AP 110 may indicate the value of the contention parameters in a beacon, association response or through a management frame. In another aspect, the AP 110 may provide a delay timer that prevents a user terminal 120 from transmitting for a certain amount of time after each successful UL-MU-MIMO TXOP or after each RTX, RTS, PS-poll, or QoS null frame. The timer may be restarted after each successful UL-MU-MIMO TXOP. In one aspect, the AP 110 may indicate the delay timer to user terminals 120 in the setup phase or the delay timer may be different for each user terminal 120. In another aspect, the AP 110 may indicate the delay timer in the CTX message 402 or the delay timer may be dependent on the order of the user terminals 120 in the CTX message 402, and may be different for each terminal.

In another operational mode, the AP 110 may indicate a time interval during which the user terminals 120 are allowed to transmit a UL-MU-MIMO transmission. In one aspect, the AP 110 indicates a time interval to the user terminals 120 during which the user terminals are allowed to send a RTX or RTS or other request to the AP 110 to ask for an UL-MU-MIMO transmission. In this aspect, the user terminals 120 may use regular contention protocol. In another aspect, the user terminals may not initiate a UL-MU-MIMO transmission during the time interval but the AP 110 may send a CTX or other message to the user terminals to initiate the UL-MU-MIMO transmission.

In certain embodiments, a user terminal 120 enabled for UL-MU-MIMO may indicate to an AP 110 that it requests an UL-MU-MIMO TXOP because it has data pending for UL. In one aspect, the user terminal 120 may send a RTS or a PS-poll to request a UL-MU-MIMO TXOP. In another embodiment, the user terminal 120 may send any data frame, including a quality of service (QoS) null data frame, where the bits 8-15 of the QoS control field indicate a non-empty queue. In this embodiment the user terminal 120 may determine during the setup phase which data frames (e.g., RTS, PS-poll, QoS null, etc.) will trigger a UL-MU-MIMO transmission when the bits 8-15 of the QoS control field indicate a non-empty queue. In one embodiment, the RTS, PS-poll, or QoS null frames may include a 1-bit indication allowing or disallowing the AP 110 to respond with a CTX message 402. In another embodiment, the QoS null frame may include TX power information and a per TID queue information. The TX power information and per TID queue information may be inserted in the two bytes of the sequence control and QoS controls fields in a QoS null frame and the modified QoS null frame may be sent to the AP 110 to request a UL-MU-MIMO TXOP. In another embodiment, referring to FIGs. 1 and 7, the user terminal 120 may send a RTX 701 to request a UL-MU-MIMO TXOP.

In response to receiving an RTS, RTX, PS-poll or QoS null frame, or other trigger frame as described above, an AP 110 may send a CTX message 402. In one embodiment, referring to FIG. 7, after the transmission of the CTX message 402 and the completion of the UL-MU-MIMO transmissions 410A and 410B, TXOP returns to the STAs 120A and 120B which can decide on how to use the remaining TXOP. In another embodiment, referring to FIG. 7, after the transmission of the CTX message 402 and the completion of the UL-MU-MIMO transmissions 410A and 410B, TXOP remains with the AP 110 and the AP 110 may use the remaining TXOP for additional UL-MU-MIMO transmissions by sending another CTX message 402 to either STAs 120A and 120B or to other STAs.

As discussed above, the CTX message 402 may be used in a variety of communications. FIG. 8 is a diagram of an example of a CTX frame 1200 structure. In this embodiment, the CTX frame 1200 is a control frame that includes a frame control (FC) field 1205, a duration field 1210, a transmitter address (TA) field 1215, a control (CTRL) field 1220, a PPDU duration field 1225, a STA info field 1230, and a frame check sequence (FCS) field 1280. The FC field 1205 indicates a control subtype or an extension subtype. The duration field 1210 indicates to any receiver of the CTX frame 1200 to set the network allocation vector (NAV). The TA field 1215 indicates the transmitter address or a BSSID. The CTRL field 1220 is a generic field that may include information regarding the format of the remaining portion of the frame (e.g., the number of STA info fields and the presence or absence of any subfields within a STA info field), indications for rate adaptation for the user terminals 120, indication of allowed traffic identifier (TID), and indication that a CTS must be sent immediately following the CTX frame 1200. The CTRL field 1220 may also indicate if the CTX frame 1200 is being used for UL MU MIMO or for UL FDMA or both, indicating whether a Nss or Tone allocation field is present in the STA Info field 1230. Alternatively, the indication of whether the CTX is for UL MU MIMO or for UL FDMA can be based on the value of the subtype. Note that UL MU MIMO and UL FDMA operations can be jointly performed by specifying to a STA both the spatial streams to be used and the channel to be used, in which case both fields are present in the CTX; in this case, the Nss indication is referred to a specific tone allocation. The PPDU duration field 1225 indicates the duration of the following UL-MU-MIMO PPDU that the user terminals 120 are allowed to send. The STA Info field 1230 contains information regarding a particular STA and may include a per-STA (per user terminal 120) set of information (see STA Info 1 1230 and STA Info N 1275). The STA Info field 1230 may include an AID or MAC address field 1232 which identifies a STA, a number of spatial streams field (Nss) 1234 field which indicates the number of spatial streams a STA may use (in an UL-MU-MIMO system), a Time Adjustment 1236 field which indicates a time that a STA should adjust its transmission compared to the reception of a trigger frame (the CTX in this case), a Power Adjustment 1238 field which indicates a power backoff a STA should take from a declared transmit power, a Tone Allocation 1240 field which indicates the tones or frequencies a STA may use (in a UL-FDMA system), an Allowed TID 1242 field which indicates the allowable traffic identifier (TID), an Allowed TX Mode 1244 field which indicates the allowed TX modes, and a MCS 1246 field which indicates the MCS the STA should use. A user terminal 120 receiving a CTX with a Allowed TID 1242 indication may be allowed to transmit data only of that TID, data of the same or higher TID, data of the same or lower TID, any data, or only data of that TID first, then if no data is available, data of other TIDs. The FCS 1280 field indicates the carries an FCS value used for error detection of the CTX frame 1200.

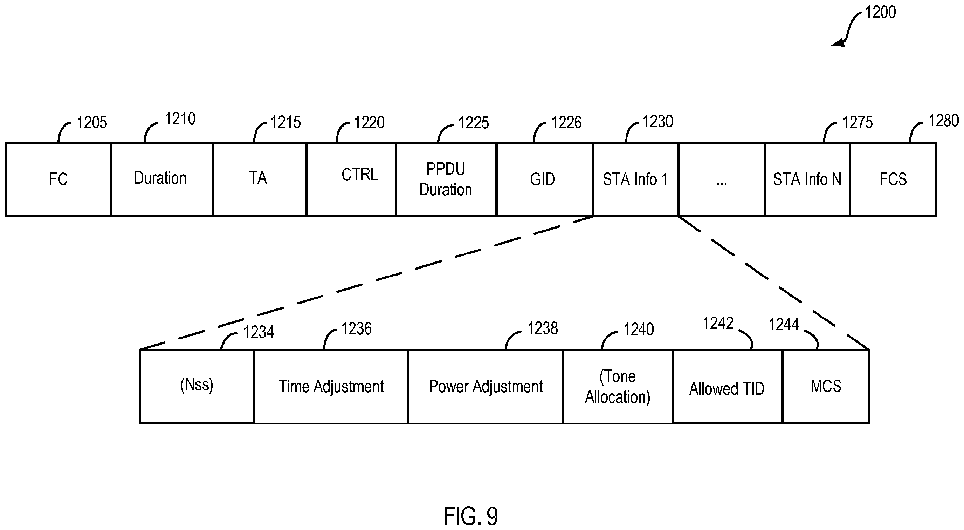

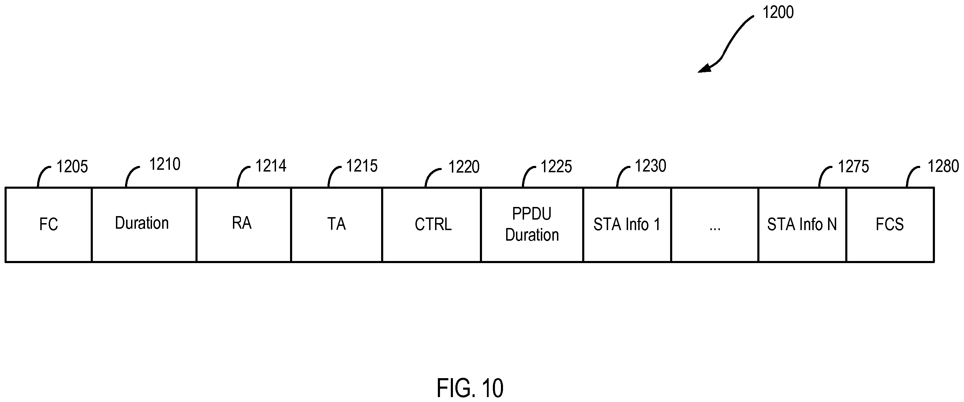

FIG. 9 is a diagram of another example of a CTX frame 1200 structure. In this embodiment and in conjunction with FIG. 8, the STA Info field 1230 does not contain the AID or MAC Address field 1232 and instead the CTX frame 1200 includes a group identifier (GID) 1226 field which identifies the STAs by a group identifier rather than an individual identifier. FIG. 10 is a diagram of another example of a CTX frame 1200 structure. In this embodiment and in conjunction with FIG. 9, the GID 1226 field is replaced with a RA 1214 field which identifies a group of STAs through a multicast MAC address.

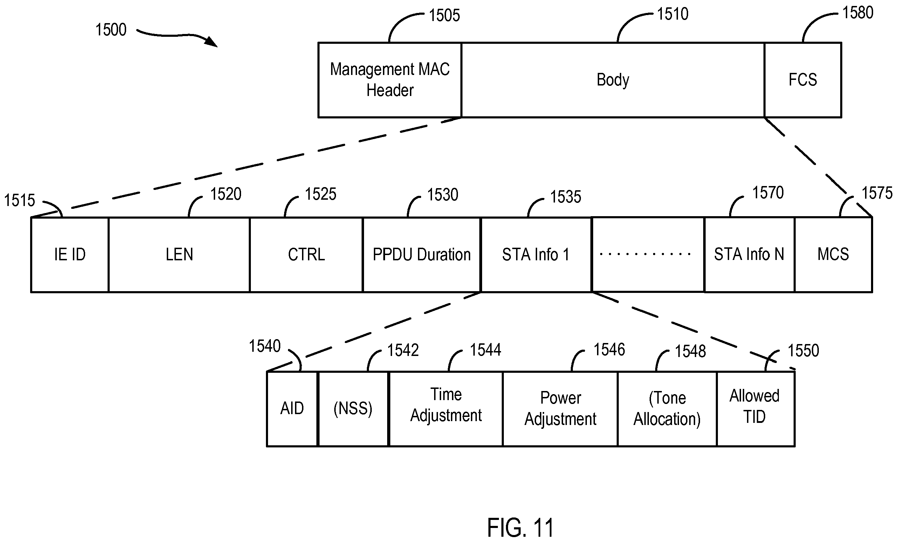

FIG. 11 is a diagram of an example of a CTX frame 1500 structure. In this embodiment, the CTX frame 1500 is a management frame that includes a Management MAC Header 1505 field, a Body 1510 field, and a FCS 1580 field. The Body 1510 field includes an IE ID 1515 field which identifies an information element (IE), a LEN 1520 field which indicates the length of the CTX frame 1500, a CTRL 1525 field which includes the same information as the CTRL field 1220, a PPDU Duration 1530 field which indicates the duration of the following UL-MU-MIMO PPDU that the user terminals 120 are allowed to send., a STA Info 1 1535 field and a MCS 1575 field which can indicate the MCS for all the STAs to use in the following UL-MU-MIMO transmission, or an MCS backoff for all the STAs to use in the following UL-MU-MIMO transmission. The STA Info 1 1535 (along with STA Info N 1570) field represent a per STA field that includes AID 1540 field which identifies a STA, a number of spatial streams field (Nss) 1542 field which indicates the number of spatial streams a STA may use (in an UL-MU-MIMO system), a Time Adjustment 1544 field which indicates a time that a STA should adjust its transmission compared to the reception of a trigger frame (the CTX in this case), a Power Adjustment 1546 field which indicates a power backoff a STA should take from a declared transmit power, a Tone Allocation 1548 field which indicates the tones or frequencies a STA may use (in a UL-FDMA system), and an Allowed TID 1550 field which indicates the allowable traffic identifier (TID).

In one embodiment, the CTX frame 1200 or the CTX frame 1500 may be aggregated in an A-MPDU to provide time to a user terminal 120 for processing before transmitting the UL signals. In this embodiment, padding or data may be added after the CTX to allow a user terminal 120 additional time to process the forthcoming packet. One benefit to padding a CTX frame may be to avoid possible contention issues for the UL signals from other user terminals 120. In one aspect, if the CTX is a management frame, additional padding IEs may be sent. In another aspect the user terminals 120 may request to an AP 110 a minimum duration or padding for the CTX frame.

In some embodiments, an AP 110 may initiate a CTX transmission. In one embodiment, an AP 110 may send a CTX message 402 in accordance with regular enhanced distribution channel access (EDCA) contention protocol. In another embodiment, an AP 110 may send a CTX message 402 at scheduled times. In this embodiment, the scheduled times may be indicated by the AP 110 to the user terminals 120 by using a restricted access window (RAW) indication in a beacon which indicates a time reserved for a group of user terminals 120 to access the medium, a target wake time (TWT) agreement with each user terminal 120 which indicates to multiple user terminals 120 to be awake at the same time to take part in a UL-MU-MIMO transmission, or information in other fields. Outside the RAW and TWT a user terminal 102 may be allowed to transmit any frame, or only a subset of frames (e.g., non-data frames). It may also be forbidden to transmit certain frames (e.g., it may be forbidden to transmit data frames). The user terminal 120 may also indicate that it is in sleep state. One advantage to scheduling a CTX is that multiple user terminals 120 may be indicated a same TWT or RAW time and may receive a transmission from an AP 110.

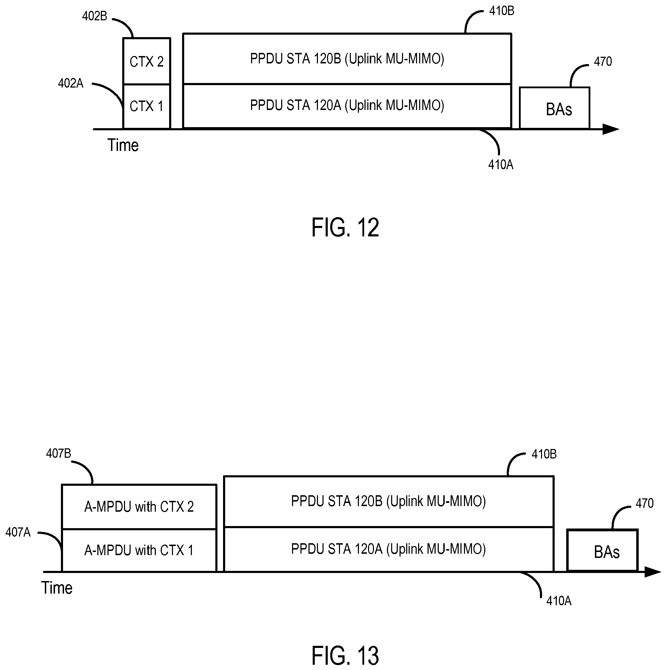

In one embodiment, a CTX message 402 may include information for a single user terminal 120. In this embodiment, an AP 110 may send multiple CTX messages 402 that include information for one user terminal 120 at the same time to multiple user terminals 120, creating a schedule for the following UL-MU-MIMO transmission 410. FIG 16 is a time sequence diagram illustrating an example of sending multiple CTX messages 402A and 402B at the same time. As shown, the CTX messages 402A and 402B may be sent simultaneously using DL-MU-MIMO or DL-FDMA transmissions to one station each (user terminal 120A and 120B, respectively). The user terminals 120A and 120B receive the CTX messages 402A and 402B and then begin the UL-MU-MIMO (or UL-FDMA) transmissions 410A and 410B. FIG. 13 is a time sequence diagram and illustrates an example of sending the CTX messages within A-MPDU messages 407A and 407B. As in FIG. 12, the CTX portion of the A-MPDU messages 407A and 407B contain information for one STA (user terminal 120A and 120B, respectively) and the user terminals 120A and 120B receive the messages 407A and 407B and begin the UL-MU-MIMO (or UL-FDMA) transmissions 410A and 410B.

In other embodiments, a user terminal 120 may not start an UL transmission after receiving a CTX message 402. In one embodiment, an AP 110 defines a new frame that triggers a UL transmission. The new frame may be any frame indicated by an AP 110 and may comprise a null data packet (NDP) frame. In this embodiment, the new frame may include a sequence or token number that links the frame to the CTX so that the user terminal knows that the frame is the same trigger frame as indicated in the CTX and may begin an UL transmission. The frame may also include a duration so that other user terminals 120 hearing the transmission can set their NAV. The user terminal 120 may acknowledge receipt of the CTX by sending an ACK or similar frame. In another embodiment a user terminal 120 may request the use of a trigger frame. The request may indicate that the trigger be immediate or delayed. One benefit of having a separate trigger frame may be that the trigger frame may give a user terminal more time to process the CTX before an UL transmission. Another benefit may be that the trigger frame may be a shorter frame than the CTX and may be sent at multiple times without subsequent CTX messages to allow for faster UL time. The trigger could frame could follow the CTX immediately, or at a pre-specified offset or set of offsets from the CTX.

FIG. 14 is a time sequence diagram that illustrates one embodiment of a CTX/Trigger exchange. In this embodiment, an AP 110 sends a CTX message 402 to the user terminals 120 and then later sends the trigger frame 405. Once the user terminals 120A and 120B receive the trigger frame 405, they begin the UL-MU-MIMO transmissions 410A and 410B. FIG. 15 is a time sequence diagrams that illustrates an example where the time between the CTX message 402 and the trigger frame 405 is greater than that shown in FIG. 14. FIG. 16 is a time sequence diagram that illustrates an example of sending multiple trigger frames 405 (or trigger PPDUs 405) over time to initiate multiple UL-MU-MIMO transmissions 410. In this embodiment, the second trigger frame 405 does not need to be preceded by the CTX 402 to initiate the second UL-MU-MIMO transmissions 410A and 410B because the user terminals 120A and 120B can just confirm the trigger frame has the same sequence or token number as indicated in the CTX and begin transmission.

Referring back to FIG. 14, in certain configurations, the trigger PPDU 405 may be a downlink (DL) single-user (SU) or multiple-user (MU) PPDU. The trigger PPDU 405 may comply with IEEE 802.11 standards and may include a data frame, a management frame, or a control frame. For example, the AP 110 may include in the CTX PPDU 402 parameters that indicate to the STAs 120a, 120b the spatial streams / (O)FDMA channels, the duration, and power to use to transmit UL PPDUs 1410A-B to the AP 110. Upon receiving the CTX PPDU 402, the STAs 120a, 120b may start preparing the UL-MU-MIMO/(O)FDMA transmission 410A-B in accordance with the parameters included in the trigger PPDU 405. Subsequently, upon receiving the trigger PPDU 405, the STAs 120a, 120b may start the UL-MU-MIMO/(O)FDMA transmission 410A-B. The UL PPDUs 1410A-B may be an SU PPDU or MU PPDU. The STAs 120a, 120b may be configured to start the UL-MU-MIMO/(O)FDMA transmission 410A-B after the reception of the trigger PPDU 405 is complete. More specifically, the STAs 120a, 120b may start the UL-MU-MIMO/(O)FDMA transmission 410A-B within a configurable time period (e.g., a SIFS/PIFS) after the reception of the trigger PPDU 405 is complete. In one technique, the STAs 120a, 120b may also include UL ACK(s) or blocks ACKs (BAs) acknowledging one or more received DL PPDUs. For example, the UL PPDU 1410A may include an UL BA 1470A; the UL PPDU 1410B may include an UL BA 1470B. Subsequently, as described *supra,* the AP 110 may transmit BAs 470 acknowledging the UL PPDUs 1410A-B.

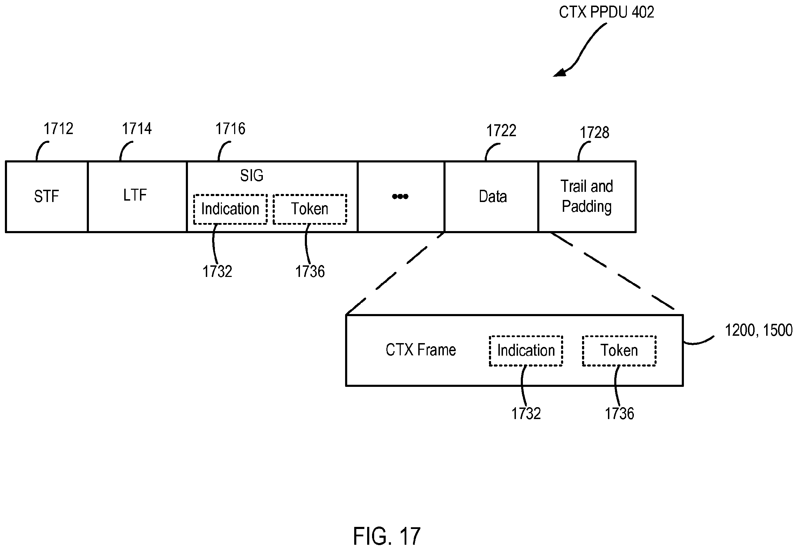

FIG. 17 is a diagram illustrating a CTX PPDU 402. The CTX PPDU 402 may include, among other fields, a short training field 1712, a long training field 1714, a SIG field 1716, a data field 1722, and a trail and padding field 1728. The data field 1722 includes the CTX frame 1200, 1500 described *supra.* Optionally, the CTX PPDU 402 may include a time indication 1732, which will be described in more detail *infra.* Also optionally, the CTX PPDU 402 may include a CTX token 1736, which will also be described in more detail *infra.* Each of the time indication 1732 and the CTX token 1736 may be included in the SIG field 1716 (or other control fields). Alternatively, each of the time indication 1732 and the CTX token 1736 may be included in a field or an IE of the CTX frame 1200, 1500.

Referring back to FIG. 14, in certain configurations, the AP 110 may include in the CTX PPDU 402 a time indication 1732 informing the STAs 120a, 120b of a time to start the UL-MU-MIMO/(O)FDMA transmission 410A-B. In one configuration, the time indication 1732 indicates that the STAs 120a, 120b may start the UL-MU-MIMO/(O)FDMA transmission 410A-B at a time point that is within a configurable time period (e.g., a SIFS/PIFS) after the reception of the CTX PPDU 402 is complete at the STAs 120a, 120b. In another configuration, the time indication 1732 indicates that the STAs 120a, 120b may start the UL-MU-MIMO/(O)FDMA transmission 410A-B at a time point that is within a configurable time period (e.g., a SIFS/PIFS) after the reception of the trigger PPDU 405 *(e.g.,* a PPDU following the CTX PPDU 402) is complete.

In certain configurations, the AP 110 may be configured to transmit the trigger PPDU 405 at a time point that is within a configurable time period (e.g., a SIFS/PIFS) after the transmission of the CTX PPDU 402 is complete. The STAs 120a, 120b may be configured to determine that any PPDU received within the configurable time period *(e.g.,* a SIFS/PIFS) after the CTX PPDU 402 is the trigger PPDU 405. In certain configurations, the STAs 120a, 120b may be configured to determine that a PPDU detected within a configurable time period (e.g., a SIFS/PIFS) after the CTX PPDU 402 and sent by the same AP *(i.e.,* the AP 110) that sent the CTX PPDU 402 is the trigger PPDU 405. The STAs 120a, 120b may determine the origin of a PPDU based on a sender identifier embedded in a physical layer (PHY) header or MAC header. For example, the PHY header may include a full or partial identifier of the AP address. In another example, the MAC header may include a basic service set identifier (BSSID).

In certain configurations, the AP 110 may include in the trigger PPDU 405 an indication indicating to the recipient STAs that this PPDU is a trigger PPDU 405. The indication may be included in the PHY header or MAC header of the trigger PPDU 405. In one configuration, the STAs 120a, 120b may be configured to detect a PPDU within a configurable time period (e.g., a SIFS/PIFS) after the reception of the CTX PPDU 402 and to determine whether the received PPDU is the trigger PPDU 405 based on the indication.

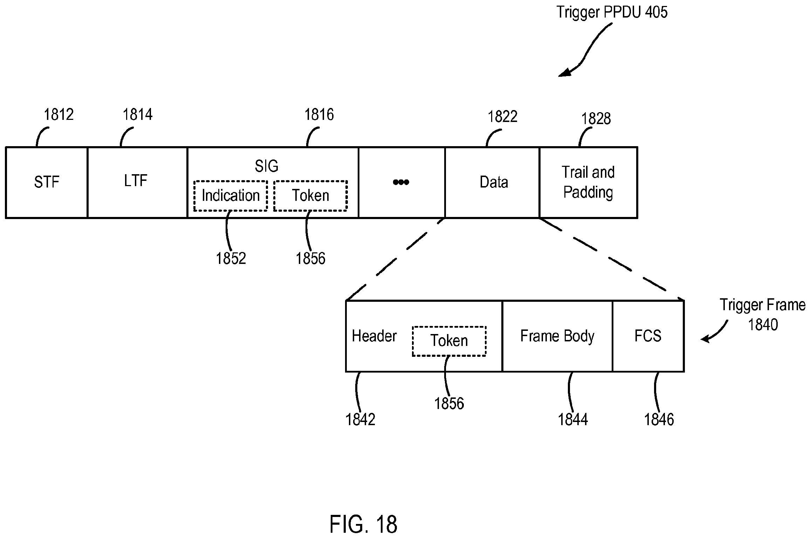

FIG. 18 is a diagram illustrating a trigger PPDU 405. The trigger PPDU 405 may include, among other fields, a short training field 1812, a long training field 1814, a SIG field 1816, a data field 1822, and a trail and padding field 1828. The data field 1822 may include a trigger frame 1840. The trigger frame 1840 includes a frame header 1842, a frame body 1844, and an FCS 1846. Optionally, the SIG field 1816 (or other control fields) may include a trigger indication 1852, which indicates to the recipient STAs that this PPDU is a trigger PPDU 405, which will be described in more detail *infra.* The trigger indication 1852 may include a single bit. Thus, by checking the value of the trigger indication 1852, the STAs 120a, 120b can determine whether a PPDU is a trigger PPDU 405. Also optionally, the trigger PPDU 405 may include a trigger token 1856, which will also be described in more detail *infra.* The trigger token 1856 may be included in the SIG field 1816 (or other control fields). Alternatively, the trigger token 1856 may be included in the frame header 1842 of the trigger frame 1840.

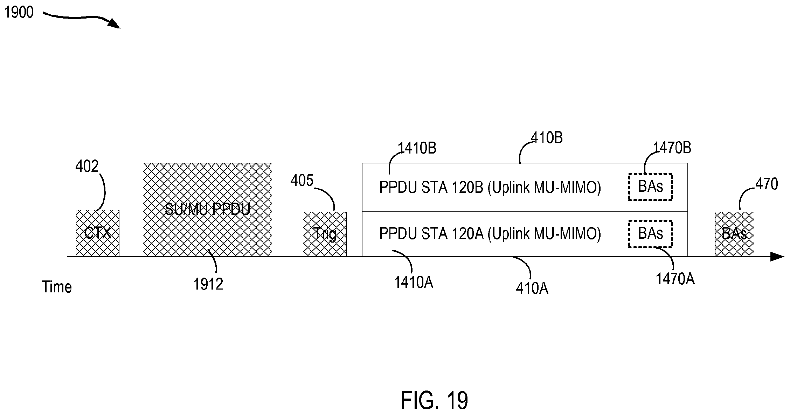

FIG. 19 is a diagram 1900 illustrating an example frame exchange including a trigger frame and an intervening PPDU. In this example, the AP 110 and the STAs 120a, 120b do not require that the trigger PPDU 405 be sent within a configurable time period (e.g., a SIFS/PIFS) after the CTX PPDU 402. Rather, the trigger PPDU 405 may be transmitted by the AP 110 at any time point after the CTX PPDU 402 is transmitted. The AP 110 may include the trigger indication 1852 in the trigger PPDU 405 to inform the recipient STAs that this PPDU is a trigger PPDU. As shown in FIG. 19, after transmitting the CTX PPDU 402, the AP 110 transmits a DL SU or MU PPDU 1912. Upon receiving the DL SU or MU PPDU 1912, the STAs 120a, 120b may detect whether the DL SU or MU PPDU 1912 includes a trigger indication 1852 indicating that the DL SU or MU PPDU 1912 is a trigger PPDU 405. In this example, the DL SU or MU PPDU 1912 does not include such an indication. Accordingly, the STAs 120a, 120b do not start the UL-MU-MIMO/(O)FDMA transmission 410A-B within the configurable time period (e.g., a SIFS/PIFS) after receiving the DL SU or MU PPDU 1912. Subsequently, the AP 110 transmits the trigger PPDU 405, which includes a trigger indication 1852 indicating that this PPDU is a trigger PPDU. Accordingly, the STAs 120a, 120b may start the UL-MU-MIMO/(O)FDMA transmission 410A-B as described *supra.* The AP 110 may transmit the BAs 470 as described *supra.*

Referring back to FIGs. 17-18, in certain configurations, the AP 110 may include in the CTX PPDU 402 a CTX token 1736 defining a particular token number that identifies the CTX PPDU 402. Subsequently, the AP 110 may include a trigger token 1856 defining the same particular token number in the corresponding trigger PPDU 405. In one configuration, the trigger token 1856 may be included in the SIG field 1816 (or other control fields) of the trigger PPDU 405. The SIG field 1816 may function as the trigger indication 1852. For example, the presence of the SIG field 1816 indicates that this PPDU is a trigger PPDU. The absence of the SIG field 1816 indicates that this PPDU is not a trigger PPDU. Further, presence or absence of the control field may be indicated by a single bit in the PHY header. Alternatively, the trigger token 1856 may be included in the trigger frame 1840.

More specifically, the trigger token 1856 may be a proxy for the information indicated in the CTX PPDU 402. Upon receiving a PPDU, the STAs 120a, 120b can determine whether the PPDU is a trigger PPDU 405 based on the trigger indication 1852. If the PPDU is a trigger PPDU 405, the STAs 120a, 120b then retrieve the trigger token 1856 from the trigger PPDU 405. The STAs 120a, 120b match the trigger token 1856 with the CTX tokens 1736 of one or more CTX PPDUs 402 received previously to determine the CTX PPDU 402 corresponding to the trigger PPDU 405. Subsequently, the STAs 120a, 120b may start the UL-MU-MIMO/(O)FDMA transmission 410A-B based on the corresponding CTX PPDU 402 within a configurable time period (e.g., a SIFS/PIFS) after the trigger PPDU 405, as described *supra,* if the corresponding CTX PPDU 402 is found.

Further, the CTX token 1736 and the trigger token 1856 may be valid for a certain amount of valid time after the CTX PPDU 402 carrying the CTX token 1736 is transmitted in. For example, the CTX token 1736 and the trigger token 1856 may be valid for a valid time (e.g., the TXOP) that is indicated in the CTX PPDU 402. In addition or alternatively, the AP 110 may include a valid time (e.g., the TXOP) in a management frame.

In certain configurations, the AP 110 and the STAs 120a, 120b may be configured to use the GID 1226 or the multicast MAC address in the RA 1214, which was described *supra* referring to FIG. 9-10, as the CTX token 1736 and the trigger token 1856. The STAs 120a, 120b match the GID or multicast MAC address of a particular trigger PPDU 405 with the GID 1226 or the multicast MAC address in the RA 1214 of one or more CTX PPDUs 402 to determine the corresponding CTX PPDU 402 of the particular trigger PPDU 405.

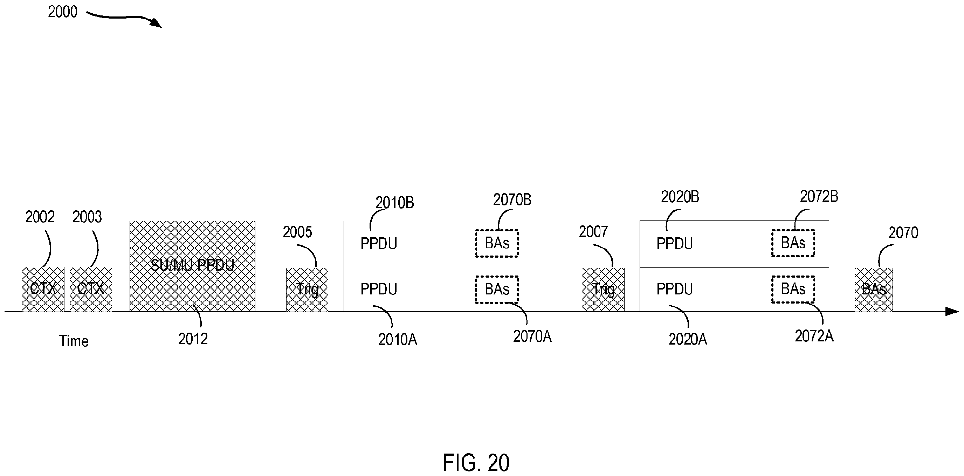

FIG. 20 is a diagram 2000 illustrating an example frame exchange including multiple trigger frames and an intervening PPDU. Initially, the AP 110 transmits a CTX PPDU 2002. The CTX PPDU 2002 may include resource allocation information and scheduling information for one or more instances of UL-MU-MIMO/(O)FDMA transmission. In this example, the CTX PPDU 2002 includes information regarding a first instance of UL-MU-MIMO/(O)FDMA transmission at the STAs 120a, 120b and a second instance of UL-MU-MIMO/(O)FDMA transmission at the STAs 120c, 120d. The AP 110 may also include, in the CTX PPDU 2002, two CTX tokens 1736 each identifying one of the two instances.

Alternatively, the AP 110 may transmit more than one CTX PPDUs each including resource allocation information and scheduling information of a subset of the instances of the UL-MU-MIMO/(O)FDMA transmission. In this example, the AP 110 may include the resource allocation information and scheduling information for the STAs 120a, 120b in the CTX PPDU 2002. Subsequently, the AP 110 may transmit a CTX PPDU 2003 that includes resource allocation information and scheduling information for the STAs 120c, 120d and the corresponding CTX token 1736.

The AP 110 may transmit a DL SU or MU PPDU 2012 after transmitting the CTX PPDU 2002 / CTX PPDU 2003. The DL SU or MU PPDU 2012 does not include a trigger indication 1852 that indicates this PPDU is a trigger PPDU. Accordingly, the STAs 120a, 120b and the STAs 120c, 120d do not start UL-MU-MIMO/(O)FDMA transmission in accordance with the resource allocation information and scheduling information set in the CTX PPDU 2002 / CTX PPDU 2003.

The AP 110 transmits a trigger PPDU 2005, which includes a trigger indication 1852 that indicates this PPDU is a trigger PPDU and a first trigger token 1856 that matches the CTX token 1736 in the CTX PPDU 2002 / CTX PPDU 2003 for the first instance of UL-MU-MIMO/(O)FDMA transmission. Upon receiving the trigger PPDU 2005, the STAs 120a, 120b may determine, based on the first trigger token 1856, that the trigger PPDU 2005 is directed to them *(i.e.,* the STAs 120a, 120b) and may start the UL-MU-MIMO/(O)FDMA transmission of an UL PPDU 2010A and an UL PPDU 2010B. The UL PPDUs 2010A-B may include UL BAs 2070A-B, as described *supra.* On the other hand, the STAs 120c, 120d determine that the trigger PPDU 2005 is not directed to them *(i.e.,* the STAs 120c, 120d) and do not start UL-MU-MIMO/(O)FDMA transmission.

Subsequently, the AP 110 transmits a trigger PPDU 2007, which includes a trigger indication 1852 that indicates this PPDU is a trigger PPDU and a second trigger token 1856 that matches the CTX token 1736 in the CTX PPDU 2002 / CTX PPDU 2003 for the second instance of UL-MU-MIMO/(O)FDMA transmission. Upon receiving the trigger PPDU 2005, the STAs 120c, 120d may determine, based on the second trigger token 1856, that the trigger PPDU 2007 is directed to them *(i.e.,* the STAs 120c, 120d) and may start the UL-MU-MIMO/(O)FDMA transmission of an UL PPDU 2020A and an UL PPDU 2020B. The UL PPDUs 2020A-B may include UL BAs 2072A-B, as described *supra.* On the other hand, the STAs 120a, 120b determine that the trigger PPDU 2007 is not directed to them *(i.e.,* the STAs 120a, 120b) and do not start UL-MU-MIMO/(O)FDMA transmission. Subsequently, the AP 110 may transmit a BA 2070 acknowledging the received PPDUs, as described *supra.*

In certain configurations, the AP 110 may include in the CTX PPDU 2002 / CTX PPDU 2003 partial resource allocation information and scheduling information such as the resource allocation information and scheduling information that needs to be updated less frequently. The AP 110 may include in the trigger PPDU 2005 and the trigger PPDU 2007 the resource allocation information and scheduling information that needs to be updated more frequently. For example, the trigger PPDU 2005 and the trigger PPDU 2007 may include fresh power control indications and a fresh timing estimation indication.

Further, although FIGs. 14, 19, and 20 show that a CTX PPDU sent as a first PPDU immediately followed by other DL PPDUs, any other frame exchange is possible as long as the CTX PPDU defining a CTX token 1736 is sent before a trigger PPDU having the corresponding trigger token 1856. In addition, the definition of the token may be sent as a unicast CTX frame to multiple STAs. Accordingly, each CTX frame may be acknowledged by one or more STAs to promote robustness.

Referring back to FIG. 14, in certain configurations, the AP 110 and the STAs 120a, 120b may be configured to use other fields (e.g., existing fields or legacy fields) of the trigger PPDU 405 to function as the trigger token 1856. The AP 110 may include indications of those fields in the CTX PPDU 402 as the CTX token 1736. Hence, a legacy PPDU that does not host the additional control signaling may also function as the trigger PPDU 405 with a trigger token 1856. For example, the AP 110 may use information naturally present in a DL PPDU that can identify an individual PPDU to define the CTX token 1736 and the trigger token 1856. The AP 110 may previously know which specific PPDU will be transmitted as the trigger PPDU 405. Thus, the AP may include in a CTX PPDU 402, particular information naturally present in the specific PPDU. Subsequently, the STAs 120a, 120b learns the particular information from the CTX PPDU 402, and may use the particular info to determine that a received PPDU is a trigger PPDU 405 if the received PPDU contains the particular information.

More specifically, the AP 110 may include in a CTX PPDU 402 any portion/combination/function of information (e.g., bits) that will be sent in a PHY header of a trigger PPDU 405. The information may be any one or a combination of the information described below. The information may include: 1) a cyclic redundancy check (CRC) field of a SIG field of a legacy preamble; 2) a Length field and/or a modulation and coding scheme (MCS) field *(e.g.,* in a legacy header or in an IEEE 802.11n/ac or next generation header); 3) a type of the PPDU (e.g., for an IEEE 802.11a/b/g/n PPDU); 4) a bandwidth (BW); 5) a group ID field *(e.g.,* for an IEEE 802.11ac PPDU); 6) a partial AID field; 7) any other field of a SIG field; or 8) any subset of bits or a function of the subset of bits of a SIG field.

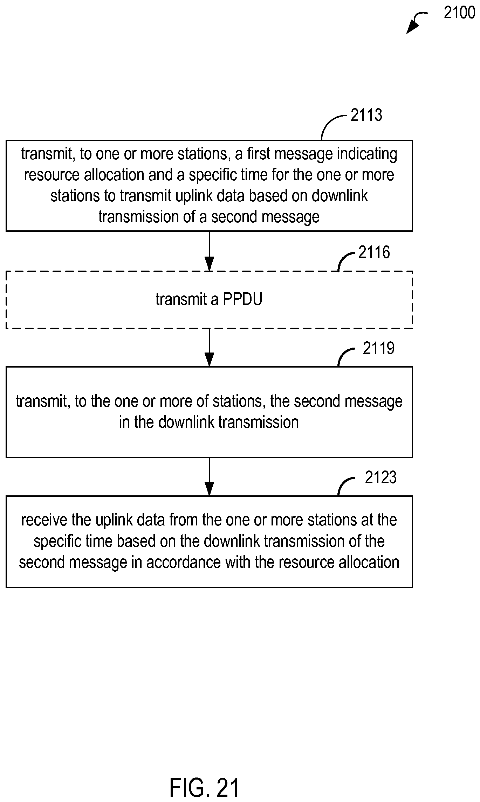

FIG. 21 is a flow chart 2100 of a method (process) for transmitting a triggering message. The method may be performed by an access point (e.g., the AP 110, the apparatus 302/2300). At operation 2113, the access point transmits, to one or more stations, a first message indicating resource allocation and a specific time for the one or more stations to transmit uplink data based on downlink transmission of a second message. For example, referring to FIG. 20, the AP 110 transmits to the STAs 120a, 120b the CTX PPDU 2002.

In certain configurations, at operation 2116, the access point may transmit a PPDU. The PPDU does not include an indication indicating that the PPDU is a trigger for transmitting the uplink data. For example, referring to FIG. 20, the AP 110 transmits to the STAs 120a, 120b the DL SU or MU PPDU 2012. At operation 2119, the access point transmits, to the one or more stations, the second message in the downlink transmission. For example, referring to FIG. 20, the AP 110 transmits to the STAs 120a, 120b the trigger PPDU 2005. At operation 2123, the access point receives the uplink data from the one or more stations at the specific time based on the downlink transmission of the second message in accordance with the resource allocation. For example, referring to FIG. 20, the AP 110 receives the UL PPDUs 2010A-B.

In certain configurations, the specific time comprises a time period after the downlink transmission of the second message. In certain configurations, the time period after the downlink transmission of the second message is within a SIFS or a PIFS after the downlink transmission of the second message. For example, referring to FIG. 14, the time indication 1732 indicates that the STAs 120a, 120b may start the UL-MU-MIMO/(O)FDMA transmission 410A-B at a time point that is within a configurable time period *(e.g.,* a SIFS/PIFS) after the reception of the trigger PPDU 405 *(e.g.,* a PPDU following the CTX PPDU 402) is complete.

In certain configurations, the second message includes an indication indicating that the second message is a trigger for transmitting the uplink data. The indication is included in a physical layer (PHY) header or a media access control (MAC) header of the second message. For example, referring to FIG. 18, the trigger PPDU 405 includes a trigger indication 1852. In certain configurations, the first message includes a first token. The second message includes a second token that matches the first token. In certain configurations, the second token is included in a PHY header or MAC header of the second message. In certain configurations, the first token and the second token expire after a predetermined time period subsequent to the transmission of the first message. For example, referring to FIGs. 17-18, the CTX PPDU 402 includes the CTX token 1736 and the trigger PPDU 405 includes the trigger token 1856.

In certain configurations, the second message includes a PHY header including an access point address identifier or a MAC header including a basic service set identifier (BSSID). In certain configurations, the access point may receive, from the one or more stations, an acknowledgment of the first message including the first token. In certain configurations, the second message includes a control field including the indication that the second message is a trigger for transmitting the uplink data. The control field may include at least one of the second token, an access point identifier, or an indication that the second message includes a trigger frame. In certain configurations, the PHY header of the second message may include an indication that the control field is present in the second message. The control field includes the second token. In certain configurations, one or more messages may include a plurality of tokens. A plurality of PPDUs may be transmitted after the transmission of the one or more messages. A respective PPDU includes a corresponding control field including a respective token. The corresponding control field including the respective token number indicates that the respective PPDU is a trigger for transmitting uplink data.

In an aspect, the first token may include information present in the PHY/MAC header of the second message. The information may be one or more of a CRC of a SIG field of the second message (e.g., a legacy SIG field or a SIG field compliant with IEEE 802.11n/ac, for example), a length field of the SIG field, a MCS field of the SIG field, a PPDU type field of the SIG field, a BW field of the SIG field, a group identifier field of the SIG field, or a full or partial sender identifier field of the SIG field. Additionally or alternatively, the information may be at least one field of the SIG field. Moreover, the information may be a subset of bits or a function of the subset of bits of the SIG field.

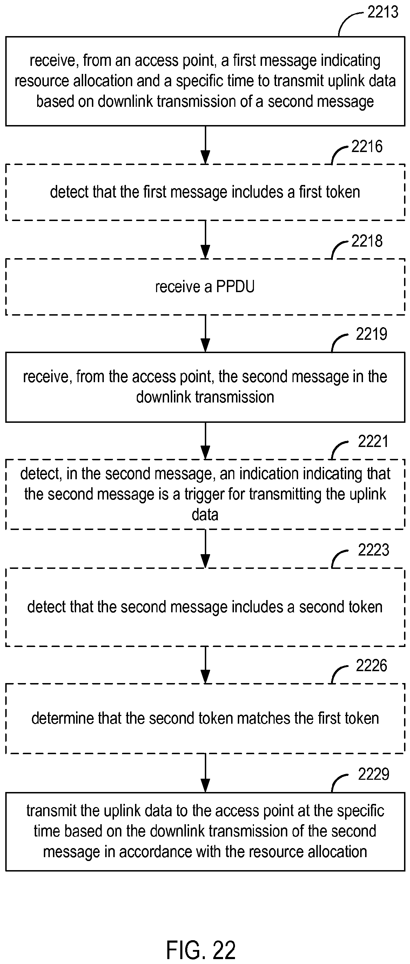

FIG. 22 is a flow chart 2200 of a method (process) for responding to a triggering message. The method may be performed by a station (e.g., the STA 120, the apparatus 302/2300). At operation 2213, the station receives, from an access point, a first message indicating resource allocation and a specific time to transmit uplink data based on downlink transmission of a second message. For example, referring to FIG. 20, the STAs 120a, 120b receive from the AP 110 the CTX PPDU 2002. In certain configurations, at operation 2216, the station detects that the first message includes a first token. For example, referring to FIG. 20, the STAs 120a, 120b detects the first CTX token 1736 in the CTX PPDU 2002. In certain configurations, at operation 2218, the station receives a PPDU subsequent to the reception of the first message and prior to the reception of the second message. The PPDU does not include an indication indicating that the PPDU is a trigger for transmitting the uplink data. For example, referring to FIG. 20, the STAs 120a, 120b receive from the AP 110 the DL SU or MU PPDU 2012. At operation 2219, the station receives, from the access point, the second message in the downlink transmission. For example, referring to FIG. 20, the STAs 120a, 120b receive from the AP 110 the trigger PPDU 2005.

In certain configurations, at operation 2221, the station detects, in the second message, an indication indicating that the second message is a trigger for transmitting the uplink data. The uplink data is transmitted in response to the detection of the indication. For example, referring to FIG. 20, the STAs 120a, 120b detect that the trigger PPDU 2005 includes a trigger indication 1852. In certain configurations, at operation 2223, the station detects that the second message includes a second token. For example, referring to FIG. 20, the STAs 120a, 120b detect the first trigger token 1856 in the trigger PPDU 2005. In certain configurations, at operation 2226, the station determines that the second token matches the first token. at operation 2229, the station transmits the uplink data to the access point at the specific time based on the downlink transmission of the second message in accordance with the resource allocation.

In certain configurations, the resource allocation is for at least two stations including the station. The transmission of the uplink data is concurrent with uplink transmission of another station of the at least two stations. The specific time comprises a time period after the downlink transmission of the second message. In certain configurations, the time period after the downlink transmission of the second message is within a SIFS or a PIFS after the downlink transmission of the second message. In certain configurations, the second token is included in a PHY header or MAC header of the second message. In certain configurations, the first token and the second token expire after a predetermined amount of time subsequent to the reception of the first message.

In certain configurations, the second message includes a PHY header including an access point address identifier or a MAC header including a basic service set identifier (BSSID). In certain configurations, the station may transmit to the access point an acknowledgment of the first message including the first token. In certain configurations, the second message includes a control field including the indication that the second message is a trigger for transmitting the uplink data. The control field may include at least one of the second token, an access point identifier, or an indication that the second message includes a trigger frame. In certain configurations, the PHY header of the second message may include an indication that the control field is present in the second message. The control field includes the second token. In certain configurations, one or more messages may include a plurality of tokens. A plurality of PPDUs may be transmitted after the transmission of the one or more messages. A respective PPDU includes a corresponding control field including a respective token. The corresponding control field including the respective token number indicates that the respective PPDU is a trigger for transmitting uplink data.

In an aspect, the first token may include information present in the PHY/MAC header of the second message. The information may be one or more of a CRC of a SIG field of the second message (e.g., a legacy SIG field or a SIG field compliant with IEEE 802.11n/ac, for example), a length field of the SIG field, a MCS field of the SIG field, a PPDU type field of the SIG field, a BW field of the SIG field, a group identifier field of the SIG field, or a full or partial sender identifier field of the SIG field. Additionally or alternatively, the information may be at least one field of the SIG field. Moreover, the information may be a subset of bits or a function of the subset of bits of the SIG field.

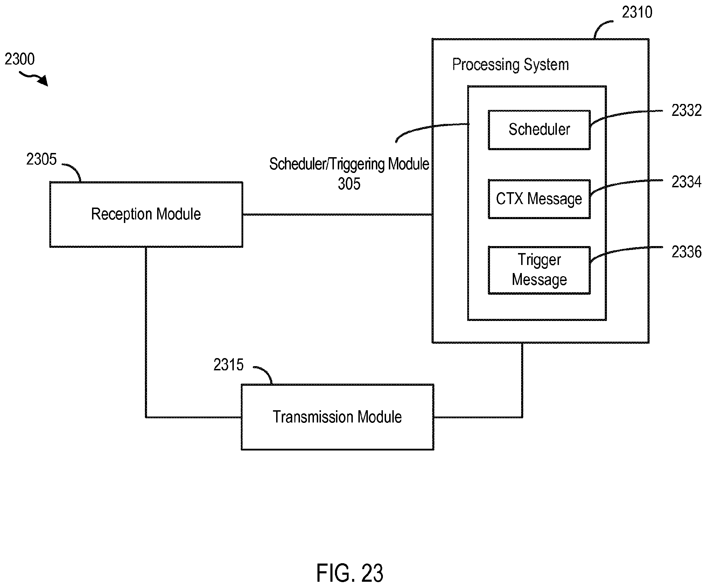

FIG. 23 is a functional block diagram of an example wireless communication device 2300. The wireless communication device 2300 may include a reception module 2305, a processing system 2310, and a transmission module 2315. The processing system 2310 may include the scheduler/triggering module 305 illustrated in FIG. 3. The scheduler/triggering module 305 may be configured to perform the various functions recited herein. The scheduler/triggering module 305 may include, among other components, a scheduler 2332, a CTX message module 2334, and a trigger message module 2336.

In one aspect, the wireless communication device 2300 may be an access point. The scheduler 2332, the CTX message module 2334, and the transmission module 2315 may be configured to transmit, to one or more stations, a first message indicating resource allocation and a specific time for the one or more stations to transmit uplink data based on downlink transmission of a second message. The scheduler 2332, the trigger message module 2336, and the transmission module 2315 may be configured to transmit, to the one or more stations, the second message in the downlink transmission. The scheduler 2332 and the reception module 2305 may be configured to receive the uplink data from the one or more stations at the specific time based on the downlink transmission of the second message in accordance with the resource allocation.

In certain configurations, the specific time comprises a time period after the downlink transmission of the second message. In certain configurations, the time period after the downlink transmission of the second message is within a SIFS or a PIFS after the downlink transmission of the second message. In certain configurations, the second message includes an indication indicating that the second message is a trigger for transmitting the uplink data. The indication is included in a PHY header or a MAC header of the second message. In certain configurations, the scheduler 2332 and the transmission module 2315 may be configured to transmit a PPDU subsequent to the transmission of the first message and prior to the transmission of the second message. The PPDU does not include an indication indicating that the PPDU is a trigger for transmitting the uplink data. In certain configurations, the first message includes a first token. The second message includes a second token that matches the first token. In certain configurations, the second token is included in a PHY header or a MAC header of the second message. In certain configurations, the first token and the second token expire after a predetermined time period subsequent to the transmission of the first message.

Moreover, means for performing the various recited functions may include the reception module 2305, the transmission module 2315, and/or the scheduler/triggering module 305. The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

Particularly, the apparatus 302/2300 may be an access point. The apparatus 302/2300 may be configured to include means for transmitting, to one or more stations, a first message indicating resource allocation and a specific time for the one or more stations to transmit uplink data based on downlink transmission of a second message. The apparatus 302/2300 may be configured to include means for transmitting, to the one or more stations, the second message in the downlink transmission. The apparatus 302/2300 may be configured to include means for receiving the uplink data from the one or more stations at the specific time based on the downlink transmission of the second message in accordance with the resource allocation.

In certain configurations, the specific time comprises a time period after the downlink transmission of the second message. In certain configurations, the time period after the downlink transmission of the second message is within SIFS or PIFS after the downlink transmission of the second message. In certain configurations, the second message includes an indication indicating that the second message is a trigger for transmitting the uplink data, and the indication is included in a PHY header or a MAC header of the second message. In certain configurations, the apparatus 302/2300 may be configured to include means for transmitting a PPDU subsequent to the transmission of the first message and prior to the transmission of the second message. The PPDU does not include an indication indicating that the PPDU is a trigger for transmitting the uplink data. In certain configurations, the first message includes a first token. The second message includes a second token that matches the first token. In certain configurations, the second token is included in a PHY header or a MAC header of the second message. In certain configurations, the first token and the second token expire after a predetermined time period subsequent to the transmission of the first message.

In another aspect, the wireless communication device 2300 may be a station. The CTX message module 2334 and the reception module 2305 may be configured to receive, from an access point, a first message indicating resource allocation and a specific time to transmit uplink data based on downlink transmission of a second message. The trigger message module 2336 and the reception module 2305 may be configured to receive, from the access point, the second message in the downlink transmission. The scheduler 2332 and the transmission module 2315 may be configured to transmit the uplink data to the access point at the specific time based on the downlink transmission of the second message in accordance with the resource allocation.

In certain configurations, the resource allocation is for at least two stations including the station. The transmission of the uplink data is concurrent with uplink transmission of another station of the at least two stations. In certain configurations, the specific time comprises a time period after the downlink transmission of the second message. In certain configurations, the time period after the downlink transmission of the second message is within a SIFS or a PIFS after the downlink transmission of the second message.

In certain configurations, the trigger message module 2336 and the reception module 2305 may be configured to detect, in the second message, an indication indicating that the second message is a trigger for transmitting the uplink data. The uplink data is transmitted in response to the detection of the indication. In certain configurations, the reception module 2305 may be configured to receive a PPDU subsequent to the reception of the first message and prior to the reception of the second message. The PPDU does not include an indication indicating that the PPDU is a trigger for transmitting the uplink data. In certain configurations, the CTX message module 2334 may be configured to detect that the first message includes a first token. The trigger message module 2336 may be configured to detect that the second message includes a second token. The CTX message module 2334 and the trigger message module 2336 may be configured to determine that the second token matches the first token. The transmission of the uplink data is performed in response to the determination that the second token matches the first token. In certain configurations, the second token is included in a PHY header or MAC header of the second message. In certain configurations, the first token and the second token expire after a predetermined amount of time subsequent to the reception of the first message.

Moreover, means for performing the various recited functions may include the reception module 2305, the transmission module 2315, and/or the scheduler/triggering module 305. The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

Particularly, the apparatus 302/2300 may be a station. The apparatus 302/2300 may be configured to include means for receiving, from an access point, a first message indicating resource allocation and a specific time to transmit uplink data based on downlink transmission of a second message. The apparatus 302/2300 may be configured to include means for receiving, from the access point, the second message in the downlink transmission. The apparatus 302/2300 may be configured to include means for transmitting the uplink data to the access point at the specific time based on the downlink transmission of the second message in accordance with the resource allocation.

In certain configurations, the resource allocation is for at least two stations including the station. The transmission of the uplink data is concurrent with uplink transmission of another station of the at least two stations. In certain configurations, the specific time comprises a time period after the downlink transmission of the second message. In certain configurations, the time period after the downlink transmission of the second message is within SIFS or PIFS after the downlink transmission of the second message. In certain configurations, the apparatus 302/2300 may be configured to include means for detecting, in the second message, an indication indicating that the second message is a trigger for transmitting the uplink data. The uplink data is transmitted in response to the detection of the indication. In certain configurations, the apparatus 302/2300 may be configured to include means for receiving a PPDU subsequent to the reception of the first message and prior to the reception of the second message. The PPDU does not include an indication indicating that the PPDU is a trigger for transmitting the uplink data. In certain configurations, the apparatus 302/2300 may be configured to include means for detecting that the first message includes a first token. The apparatus 302/2300 may be configured to include means for detecting that the second message includes a second token. The apparatus 302/2300 may be configured to include means for determining that the second token matches the first token. The transmission of the uplink data is performed in response to the determination that the second token matches the first token. In certain configurations, the second token is included in a PHY header or a MAC header of the second message. In certain configurations, the first token and the second token expire after a predetermined amount of time subsequent to the reception of the first message.

The processor 304, the memory 306, the signal detector 318, the DSP 320, and the scheduler/triggering module 305 may constitute the processing system 2310. The processor 304, the memory 306, and the transceiver 314 may constitute the transmission module 2315 and the reception module 2305. As described *supra,* the scheduler/triggering module 305 includes the scheduler 2332, the CTX message module 2334, and the trigger message module 2336. Each of the scheduler 2332, the CTX message module 2334, and the trigger message module 2336 may employ, among other components, the processor 304 and the memory 306.

A person/one having ordinary skill in the art would understand that information and signals can be represented using any of a variety of different technologies and techniques. For example, data, instructions, commands, information, signals, bits, symbols, and chips that can be referenced throughout the above description can be represented by voltages, currents, electromagnetic waves, magnetic fields or particles, optical fields or particles, or any combination thereof.

Various modifications to the implementations described in this disclosure can be readily apparent to those skilled in the art, and the generic principles defined herein can be applied to other implementations without departing from the spirit or scope of this disclosure. Thus, the disclosure is not intended to be limited to the implementations shown herein, but is to be accorded the widest scope consistent with the claims, the principles and the novel features disclosed herein. The word "exemplary" is used exclusively herein to mean "serving as an example, instance, or illustration." Any implementation described herein as "exemplary" is not necessarily to be construed as preferred or advantageous over other implementations.

Certain features that are described in this specification in the context of separate implementations also can be implemented in combination in a single implementation. Conversely, various features that are described in the context of a single implementation also can be implemented in multiple implementations separately or in any suitable sub-combination. Moreover, although features can be described above as acting in certain combinations and even initially claimed as such, one or more features from a claimed combination can in some cases be excised from the combination, and the claimed combination can be directed to a sub-combination or variation of a sub-combination.

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

In one or more aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Thus, in some aspects computer readable medium may comprise non-transitory computer readable medium (e.g., tangible media). In addition, in some aspects computer readable medium may comprise transitory computer readable medium (e.g., a signal). Combinations of the above should also be included within the scope of computer-readable media.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

While the foregoing is directed to aspects of the present disclosure, other and further aspects of the disclosure may be devised without departing from the basic scope thereof, and the scope thereof is determined by the claims that follow.

**In the following, further embodiments are described to facilitate the understanding of the invention:**
1. A method of wireless communication of an access point, comprising:
   transmitting, to one or more stations, a first message indicating resource allocation and a specific time for the one or more stations to transmit uplink data based on downlink transmission of a second message;
   transmitting, to the one or more stations, the second message in the downlink transmission; and
   receiving the uplink data from the one or more stations at the specific time based on the downlink transmission of the second message in accordance with the resource allocation.
2. The method of embodiment 1, wherein the specific time comprises a time period after the downlink transmission of the second message.
3. The method of embodiment 2, wherein the time period after the downlink transmission of the second message is within a short interframe space (SIFS) or a point interframe space (PIFS) after the downlink transmission of the second message.
4. The method of embodiment 1, wherein the second message includes an indication indicating that the second message is a trigger for transmitting the uplink data, and wherein the indication is included in a physical layer (PHY) header or a media access control (MAC) header of the second message.
5. The method of embodiment 4, further comprising transmitting a physical layer convergence protocol (PLCP) protocol data unit (PPDU) subsequent to the transmission of the first message and prior to the transmission of the second message, wherein the PPDU does not include an indication indicating that the PPDU is a trigger for transmitting the uplink data.
6. The method of embodiment 1, wherein the first message includes a first token, and wherein the second message includes a second token that matches the first token.
7. The method of embodiment 6, wherein the second token is included in a physical layer (PHY) header or a media access control (MAC) header of the second message.
8. The method of embodiment 6, wherein the first token and the second token expire after a predetermined time period subsequent to the transmission of the first message.
9. A method of wireless communication of a station, comprising:
   receiving, from an access point, a first message indicating resource allocation and a specific time to transmit uplink data based on downlink transmission of a second message;
   receiving, from the access point, the second message in the downlink transmission; and
   transmitting the uplink data to the access point at the specific time based on the downlink transmission of the second message in accordance with the resource allocation.
10. The method of embodiment 9, wherein the resource allocation is for at least two stations including the station, and wherein the transmission of the uplink data is concurrent with uplink transmission of another station of the at least two stations.
11. The method of embodiment 9, wherein the specific time comprises a time period after the downlink transmission of the second message.
12. The method of embodiment 11, wherein the time period after the downlink transmission of the second message is within a short interframe space (SIFS) or a point interframe space (PIFS) after the downlink transmission of the second message.
13. The method of embodiment 11, further comprising detecting, in the second message, an indication indicating that the second message is a trigger for transmitting the uplink data, wherein the uplink data is transmitted in response to the detection of the indication.
14. The method of embodiment 13, further comprising receiving a physical layer convergence protocol (PLCP) protocol data unit (PPDU) subsequent to the reception of the first message and prior to the reception of the second message, wherein the PPDU does not include an indication indicating that the PPDU is a trigger for transmitting the uplink data.
15. The method of embodiment 9, further comprising:
   detecting that the first message includes a first token;
   detecting that the second message includes a second token; and
   determining that the second token matches the first token, wherein the transmission of the uplink data is performed in response to the determination that the second token matches the first token.
16. The method of embodiment 15, wherein the second token is included in a physical layer (PHY) header or a media access control (MAC) header of the second message.
17. The method of embodiment 15, wherein the first token and the second token expire after a predetermined amount of time subsequent to the reception of the first message.
18. An apparatus for wireless communication, the apparatus being an access point, comprising:
   a memory; and
   at least one processor coupled to the memory and configured to:
      transmit, to one or more stations, a first message indicating resource allocation and a specific time for the one or more stations to transmit uplink data based on downlink transmission of a second message;
      transmit, to the one or more stations, the second message in the downlink transmission; and
      receive the uplink data from the one or more stations at the specific time based on the downlink transmission of the second message in accordance with the resource allocation.
19. The apparatus of embodiment 18, wherein the specific time comprises a time period after the downlink transmission of the second message.
20. The apparatus of embodiment 19, wherein the time period after the downlink transmission of the second message is within a short interframe space (SIFS) or a point interframe space (PIFS) after the downlink transmission of the second message.
21. The apparatus of embodiment 18, wherein the second message includes an indication indicating that the second message is a trigger for transmitting the uplink data, and wherein the indication is included in a physical layer (PHY) header or a media access control (MAC) header of the second message.
22. The apparatus of embodiment 21, wherein the at least one processor is further configured to transmit a physical layer convergence protocol (PLCP) protocol data unit (PPDU) subsequent to the transmission of the first message and prior to the transmission of the second message, and wherein the PPDU does not include an indication indicating that the PPDU is a trigger for transmitting the uplink data.
23. The apparatus of embodiment 18, wherein the first message includes a first token, and wherein the second message includes a second token that matches the first token.
24. The apparatus of embodiment 23, wherein the second token is included in a physical layer (PHY) header or a media access control (MAC) header of the second message.
25. The apparatus of embodiment 23, wherein the first token and the second token expire after a predetermined time period subsequent to the transmission of the first message.
26. An apparatus for wireless communication, the apparatus being a station, comprising:
   a memory; and
   at least one processor coupled to the memory and configured to:
      receive, from an access point, a first message indicating resource allocation and a specific time to transmit uplink data based on downlink transmission of a second message;
      receive, from the access point, the second message in the downlink transmission; and
      transmit the uplink data to the access point at the specific time based on the downlink transmission of the second message in accordance with the resource allocation.
27. The apparatus of embodiment 26, wherein the resource allocation is for at least two stations including the station, and wherein the transmission of the uplink data is concurrent with uplink transmission of another station of the at least two stations.
28. The apparatus of embodiment 26, wherein the specific time comprises a time period after the downlink transmission of the second message.
29. The apparatus of embodiment 28, wherein the time period after the downlink transmission of the second message is within a short interframe space (SIFS) or a point interframe space (PIFS) after the downlink transmission of the second message.
30. The apparatus of embodiment 28, wherein the at least one processor is further configured to detect, in the second message, an indication indicating that the second message is a trigger for transmitting the uplink data, and wherein the uplink data is transmitted in response to the detection of the indication.
31. The apparatus of embodiment 30, wherein the at least one processor is further configured to receive a physical layer convergence protocol (PLCP) protocol data unit (PPDU) subsequent to the reception of the first message and prior to the reception of the second message, and wherein the PPDU does not include an indication indicating that the PPDU is a trigger for transmitting the uplink data.
32. The apparatus of embodiment 26, wherein the at least one processor is further configured to:
   detect that the first message includes a first token;
   detect that the second message includes a second token; and
   determine that the second token matches the first token, wherein the transmission of the uplink data is performed in response to the determination that the second token matches the first token.
33. The apparatus of embodiment 32, wherein the second token is included in a physical layer (PHY) header or a media access control (MAC) header of the second message.
34. The apparatus of embodiment 32, wherein the first token and the second token expire after a predetermined amount of time subsequent to the reception of the first message.
35. An apparatus for wireless communication, the apparatus being an access point, comprising:
   means for transmitting, to one or more stations, a first message indicating resource allocation and a specific time for the one or more stations to transmit uplink data based on downlink transmission of a second message;
   means for transmitting, to the one or more stations, the second message in the downlink transmission; and
   means for receiving the uplink data from the one or more stations at the specific time based on the downlink transmission of the second message in accordance with the resource allocation.
36. The apparatus of embodiment 35, wherein the specific time comprises a time period after the downlink transmission of the second message.
37. The apparatus of embodiment 36, wherein the time period after the downlink transmission of the second message is within a short interframe space (SIFS) or a point interframe space (PIFS) after the downlink transmission of the second message.
38. The apparatus of embodiment 35, wherein the second message includes an indication indicating that the second message is a trigger for transmitting the uplink data, and wherein the indication is included in a physical layer (PHY) header or a media access control (MAC) header of the second message.
39. The apparatus of embodiment 38, further comprising means for transmitting a physical layer convergence protocol (PLCP) protocol data unit (PPDU) subsequent to the transmission of the first message and prior to the transmission of the second message, wherein the PPDU does not include an indication indicating that the PPDU is a trigger for transmitting the uplink data.
40. The apparatus of embodiment 35, wherein the first message includes a first token, and wherein the second message includes a second token that matches the first token.
41. The apparatus of embodiment 40, wherein the second token is included in a physical layer (PHY) header or a media access control (MAC) header of the second message.
42. The apparatus of embodiment 40, wherein the first token and the second token expire after a predetermined time period subsequent to the transmission of the first message.
43. An apparatus for wireless communication, the apparatus being a station, comprising:
   means for receiving, from an access point, a first message indicating resource allocation and a specific time to transmit uplink data based on downlink transmission of a second message;
   means for receiving, from the access point, the second message in the downlink transmission; and
   means for transmitting the uplink data to the access point at the specific time based on the downlink transmission of the second message in accordance with the resource allocation.
44. The apparatus of embodiment 43, wherein the resource allocation is for at least two stations including the station, and wherein the transmission of the uplink data is concurrent with uplink transmission of another station of the at least two stations.
45. The apparatus of embodiment 43, wherein the specific time comprises a time period after the downlink transmission of the second message.
46. The apparatus of embodiment 45, wherein the time period after the downlink transmission of the second message is within a short interframe space (SIFS) or a point interframe space (PIFS) after the downlink transmission of the second message.
47. The apparatus of embodiment 45, further comprising means for detecting, in the second message, an indication indicating that the second message is a trigger for transmitting the uplink data, wherein the uplink data is transmitted in response to the detection of the indication.
48. The apparatus of embodiment 47, further comprising means for receiving a physical layer convergence protocol (PLCP) protocol data unit (PPDU) subsequent to the reception of the first message and prior to the reception of the second message, wherein the PPDU does not include an indication indicating that the PPDU is a trigger for transmitting the uplink data.
49. The apparatus of embodiment 43, further comprising:
   means for detecting that the first message includes a first token;
   means for detecting that the second message includes a second token; and
   means for determining that the second token matches the first token, wherein the transmission of the uplink data is performed in response to the determination that the second token matches the first token.
50. The apparatus of embodiment 49, wherein the second token is included in a physical layer (PHY) header or a media access control (MAC) header of the second message.
51. The apparatus of embodiment 49, wherein the first token and the second token expire after a predetermined amount of time subsequent to the reception of the first message.
52. A computer-readable medium storing computer executable code for wireless communication at an access point, comprising code for:
   transmitting, to one or more stations, a first message indicating resource allocation and a specific time for the one or more stations to transmit uplink data based on downlink transmission of a second message;
   transmitting, to the one or more stations, the second message in the downlink transmission; and
   receiving the uplink data from the one or more stations at the specific time based on the downlink transmission of the second message in accordance with the resource allocation.
53. A computer-readable medium storing computer executable code for wireless communication at a station, comprising code for:
   receiving, from an access point, a first message indicating resource allocation and a specific time to transmit uplink data based on downlink transmission of a second message;
   receiving, from the access point, the second message in the downlink transmission; and
   transmitting the uplink data to the access point at the specific time based on the downlink transmission of the second message in accordance with the resource allocation.

## Claims

1. A method of wireless communication of an access point, comprising:
transmitting (2113), to one or more stations, a first message indicating resource allocation and a specific time for the one or more stations to transmit uplink data based on downlink transmission of a second message, wherein the specific time comprises a time period after the downlink transmission of the second message;
transmitting (2119), to the one or more stations, the second message in the downlink transmission; and
receiving (2123) the uplink data from the one or more stations at the specific time based on the downlink transmission of the second message in accordance with the resource allocation.

2. The method of claim 2, wherein the time period after the downlink transmission of the second message is within a short interframe space, SIFS, or a point interframe space, PIFS, after the downlink transmission of the second message.

3. The method of claim 1, wherein the first message includes a first token, and wherein the second message includes a second token that matches the first token.

4. The method of claim 3, wherein the first token and the second token expire after a predetermined time period subsequent to the transmission of the first message.

5. A method of wireless communication of a station, comprising:
receiving (2213), from an access point, a first message indicating resource allocation and a specific time to transmit uplink data based on downlink transmission of a second message wherein the specific time comprises a time period after the downlink transmission of the second message;
receiving (2219), from the access point, the second message in the downlink transmission; and
transmitting (2229) the uplink data to the access point at the specific time based on the downlink transmission of the second message in accordance with the resource allocation.

6. The method of claim 5, wherein the time period after the downlink transmission of the second message is within a short interframe space, SIFS, or a point interframe space, PIFS, after the downlink transmission of the second message.

7. The method of claim 5, further comprising:
detecting that the first message includes a first token;
detecting that the second message includes a second token; and
determining that the second token matches the first token, wherein the transmission of the uplink data is performed in response to the determination that the second token matches the first token.

8. The method of claim 7, wherein the first token and the second token expire after a predetermined amount of time subsequent to the reception of the first message.

9. A computer-program comprising instructions for performing a method according to any of the claims 1 to 4 or 5 to 8.

10. An apparatus for wireless communication, the apparatus being an access point, comprising:
means for transmitting (2315), to one or more stations, a first message indicating resource allocation and a specific time for the one or more stations to transmit uplink data based on downlink transmission of a second message wherein the specific time comprises a time period after the downlink transmission of the second message;
means for transmitting (2315), to the one or more stations, the second message in the downlink transmission; and
means for receiving (2305) the uplink data from the one or more stations at the specific time based on the downlink transmission of the second message in accordance with the resource allocation.

11. An apparatus for wireless communication, the apparatus being a station, comprising:
means for receiving (312), from an access point, a first message indicating resource allocation and a specific time to transmit uplink data based on downlink transmission of a second message wherein the specific time comprises a time period after the downlink transmission of the second message;
means for receiving (312), from the access point, the second message in the downlink transmission; and
means for transmitting (310) the uplink data to the access point at the specific time based on the downlink transmission of the second message in accordance with the resource allocation.

## Patentansprüche

1. Verfahren zur drahtlosen Kommunikation eines Zugangspunktes, umfassend:
Übertragen (2113) einer ersten Nachricht an eine oder mehrere Stationen, die eine Ressourcenzuweisung anzeigt und eine spezifische Zeit für die eine oder die mehreren Stationen zum Übertragen von Uplink-Daten basierend auf einer Downlink-Übertragung einer zweiten Nachricht, wobei die spezifische Zeit eine Zeitspanne nach der Downlink-Übertragung der zweiten Nachricht umfasst;
Übertragen (2119) der zweiten Nachricht in der Downlink-Übertragung an die eine oder die mehreren Stationen; und
Empfangen (2123) der Uplink-Daten von der einen oder den mehreren Stationen zu der spezifischen Zeit basierend auf der Downlink-Übertragung der zweiten Nachricht in Übereinstimmung mit der Ressourcenzuweisung.

2. Verfahren nach Anspruch 1, wobei die Zeitspanne nach der Downlink-Übertragung der zweiten Nachricht innerhalb eines kurzen Interframe-Raumes, SIFS, oder eines Punkt-Interframe-Raumes, PIFS, nach der Downlink-Übertragung der zweiten Nachricht liegt.

3. Verfahren nach Anspruch 1, wobei die erste Nachricht ein erstes Token beinhaltet, und wobei die zweite Nachricht ein zweites Token beinhaltet, das zu dem ersten Token passt.

4. Verfahren nach Anspruch 3, wobei das erste Token und das zweite Token nach einer vorbestimmten Zeitspanne nach dem Übertagen der ersten Nachricht ablaufen.

5. Verfahren zur drahtlosen Kommunikation einer Station, umfassend:
Empfangen (2213) von einem Zugangspunkt einer ersten Nachricht, die eine Ressourcenzuweisung anzeigt und eine spezifische Zeit zum Übertragen von Uplink-Daten basierend auf einer Downlink-Übertragung einer zweiten Nachricht, wobei die spezifische Zeit eine Zeitspanne nach der Downlink-Übertragung der zweiten Nachricht umfasst;
Empfangen (2219) von dem Zugangspunkt der zweiten Nachricht in der Downlink-Übertragung; und
Übertragen (2229) der Uplink-Daten an den Zugangspunkt zu der spezifischen Zeit basierend auf der Downlink-Übertragung der zweiten Nachricht in Übereinstimmung mit der Ressourcenzuweisung.

6. Verfahren nach Anspruch 5, wobei die Zeitspanne nach der Downlink-Übertragung der zweiten Nachricht innerhalb eines kurzen Interframe-Raumes, SIFS, oder eines Punkt-Interframe-Raumes, PIFS, nach der Downlink-Übertragung der zweiten Nachricht liegt.

7. Verfahren nach Anspruch 5, ferner umfassend:
Erkennen, dass die erste Nachricht ein erstes Token beinhaltet;
Erkennen, dass die zweite Nachricht ein zweites Token beinhaltet; und
Bestimmen, dass das zweite Token zum ersten Token passt, wobei das Übertragen der Uplink-Daten als Reaktion auf das Bestimmen durchgeführt wird, dass das zweite Token zum ersten Token passt.

8. Verfahren nach Anspruch 7, wobei das erste Token und das zweite Token nach einer vorbestimmten Zeitspanne nach dem Empfang der ersten Nachricht ablaufen.

9. Computerprogramm, umfassend Anweisungen zum Ausführen eines Verfahrens nach einem der Ansprüche 1 bis 4 oder 5 bis 8.

10. Vorrichtung zur drahtlosen Kommunikation, wobei die Vorrichtung ein Zugangspunkt ist, umfassend:
Mittel zum Übertragen (2315) einer ersten Nachricht an eine oder mehrere Stationen, die eine Ressourcenzuweisung anzeigt und eine spezifische Zeit für die eine oder die mehreren Stationen zum Übertragen von Uplink-Daten basierend auf einer Downlink-Übertragung einer zweiten Nachricht, wobei die spezifische Zeit eine Zeitspanne nach der Downlink-Übertragung der zweiten Nachricht umfasst;
Mittel zum Übertragen (2315) der zweiten Nachricht in der Downlink-Übertragung an die eine oder die mehreren Stationen; und
Mittel zum Empfangen (2305) der Uplink-Daten von der einen oder den mehreren Stationen zu der spezifischen Zeit basierend auf der Downlink-Übertragung der zweiten Nachricht in Übereinstimmung mit der Ressourcenzuweisung.

11. Vorrichtung zur drahtlosen Kommunikation, wobei die Vorrichtung eine Station ist, umfassend:
Mittel zum Empfangen (312) einer ersten Nachricht von einem Zugangspunkt, die eine Ressourcenzuweisung anzeigt und eine spezifische Zeit zum Übertragen von Uplink-Daten basierend auf einer Downlink-Übertragung einer zweiten Nachricht, wobei die spezifische Zeit eine Zeitspanne nach der Downlink-Übertragung der zweiten Nachricht umfasst;
Mittel zum Empfangen (312) der zweiten Nachricht von dem Zugangspunkt in der Downlink-Übertragung; und
Mittel zum Übertragen (310) der Uplink-Daten an den Zugangspunkt zu der spezifischen Zeit basierend auf der Downlink-Übertragung der zweiten Nachricht in Übereinstimmung mit der Ressourcenzuweisung.

## Revendications

1. Procédé de communication sans fil d'un point d'accès, comprenant :
la transmission (2113), à une ou plusieurs stations, d'un premier message indiquant une affectation de ressources et un moment spécifique pour que les une ou plusieurs stations transmettent des données de liaison montante sur la base de la transmission en liaison descendante d'un second message, dans lequel le moment spécifique comprend une période de temps après la transmission en liaison descendante du second message ;
la transmission (2119), aux une ou plusieurs stations, du second message dans la transmission en liaison descendante ; et
la réception (2123) des données de liaison montante des une ou plusieurs stations au moment spécifique sur la base de la transmission en liaison descendante du second message conformément à l'affectation de ressources.

2. Procédé selon la revendication 2, dans lequel la période de temps après la transmission en liaison descendante du second message se trouve dans un intervalle inter-trames court, SIFS, ou dans un intervalle inter-trames point, PIFS, après la transmission en liaison descendante du second message.

3. Procédé selon la revendication 1, dans lequel le premier message inclut un premier jeton, et dans lequel le second message inclut un second jeton qui correspond au premier jeton.

4. Procédé selon la revendication 3, dans lequel le premier jeton et le second jeton expirent après une période de temps prédéterminée suite à la transmission du premier message.

5. Procédé de communication sans fil d'une station, comprenant :
la réception (2213), depuis un point d'accès, d'un premier message indiquant une affectation de ressources et un moment spécifique pour transmettre des données de liaison montante sur la base de la transmission en liaison descendante d'un second message dans lequel le moment spécifique comprend une période de temps après la transmission en liaison descendante du second message ;
la réception (2219), depuis le point d'accès, du second message dans la transmission en liaison descendante ; et
la transmission (2229) des données de liaison montante au point d'accès au moment spécifique sur la base de la transmission en liaison descendante du second message conformément à l'affectation de ressources.

6. Procédé selon la revendication 5, dans lequel la période de temps après la transmission en liaison descendante du second message se trouve dans un intervalle inter-trames court, SIFS, ou dans un intervalle inter-trames point, PIFS, après la transmission en liaison descendante du second message.

7. Procédé selon la revendication 5, comprenant en outre :
la détection du fait que le premier message inclut un premier jeton ;
la détection du fait que le second message inclut un second jeton ; et
la détermination du fait que le second jeton correspond au premier jeton, dans lequel la transmission des données de liaison montante est réalisée en réponse à la détermination du fait que le second jeton correspond au premier jeton.

8. Procédé selon la revendication 7, dans lequel le premier jeton et le second jeton expirent après une quantité de temps prédéterminée suite à la réception du premier message.

9. Programme d'ordinateur comprenant des instructions pour réaliser un procédé selon l'une quelconque des revendications 1 à 4 ou 5 à 8.

10. Appareil pour la communication sans fil, l'appareil étant un point d'accès, comprenant :
des moyens pour transmettre (2315), à une ou plusieurs stations, un premier message indiquant une affectation de ressources et un moment spécifique pour que les une ou plusieurs stations transmettent des données de liaison montante sur la base de la transmission en liaison descendante d'un second message dans lequel le moment spécifique comprend une période de temps après la transmission en liaison descendante du second message ;
des moyens pour transmettre (2315), aux une ou plusieurs stations, le second message dans la transmission en liaison descendante ; et
des moyens pour recevoir (2305) les données de liaison montante des une ou plusieurs stations au moment spécifique sur la base de la transmission en liaison descendante du second message conformément à l'affectation de ressources.

11. Appareil pour la communication sans fil, l'appareil étant une station, comprenant :
des moyens pour recevoir (312), d'un point d'accès, un premier message indiquant une affectation de ressources et un moment spécifique pour transmettre des données de liaison montante sur la base de la transmission en liaison descendante d'un second message dans lequel le moment spécifique comprend une période de temps après la transmission en liaison descendante du second message ;
des moyens pour recevoir (312), du point d'accès, le second message dans la transmission en liaison descendante ; et
des moyens pour transmettre (310) les données de liaison montante au point d'accès au moment spécifique sur la base de la transmission en liaison descendante du second message conformément à l'affectation de ressources.
